(19) Europäisches Patentamt
European Patent Office
Office européen des brevets

(11) **EP 2 065 081 A1**

(12) **EUROPEAN PATENT APPLICATION**
published in accordance with Art. 153(4) EPC

(43) Date of publication:
**03.06.2009 Bulletin 2009/23**

(51) Int Cl.:
*B01D 39/16* (2006.01)   *B01D 39/00* (2006.01)
*D01F 8/10* (2006.01)   *D04H 3/00* (2006.01)
*D04H 3/10* (2006.01)   *D04H 3/16* (2006.01)
*D06M 11/00* (2006.01)   *D06M 11/05* (2006.01)

(21) Application number: **07807373.1**

(22) Date of filing: **14.09.2007**

(86) International application number:
**PCT/JP2007/067969**

(87) International publication number:
**WO 2008/035637 (27.03.2008 Gazette 2008/13)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **22.09.2006 JP 2006256938
31.10.2006 JP 2006295429**

(71) Applicant: **Kuraray Co., Ltd.
Okayama 710-8622 (JP)**

(72) Inventors:
• **TSUJIMOTO, Takuya
Kurashiki-shi
Okayama 713-8550 (JP)**
• **HIKASA, Midori
Kurashiki-shi
Okayama 713-8550 (JP)**

(74) Representative: **Vossius & Partner
Siebertstrasse 4
81675 München (DE)**

(54) **FILTER MEDIUM AND PROCESS FOR PRODUCTION OF THE SAME**

(57) A filter material comprising a nonwoven fabric which comprises an ultra-fine continuous fiber having a mean fiber diameter of 0.05 to 1.8 $\mu$m is prepared by dissolving or eluting a water-soluble thermoplastic resin from a nonwoven fabric or nonwoven web which comprises a conjugate continuous fiber comprising the water-soluble thermoplastic resin and a water-insoluble thermoplastic resin with a hydrophilic solvent and allowing to remain part of the water-soluble thermoplastic resin in the nonwoven fabric or the nonwoven web. In the filter material, the ultra-fine continuous fiber forms a bundle having a mean width of 3 to 100 $\mu$m and the nonwoven fabric has an occupancy area ratio of the bundle of the ultra-fine continuous fiber of 1 to 20% in the surface of the nonwoven fabric. The nonwoven fabric also satisfies the following formula:

$$100 \times (B)/(A) \geq 5$$

wherein (B) is a tensile strength (kgf/5cm) in each of a longitudinal direction and a width direction of the nonwoven fabric and (A) is a fabric weight (g/m$^2$).
The filter material has a high dust collection efficiency and a high liquid permeability and is suitable as a filter material for a liquid fuel such as a filter material for a diesel engine fuel.

**Description**

TECHNICAL FIELD

The present invention relates to a filter material comprising a nonwoven fabric comprising an ultra-fine continuous fiber (ultra-fine filament) and a method for producing the filter material. More specifically, the present invention relates to a fuel filter material which has an excellent durability and can not only collect microparticles (fine particles) in fuel efficiently but also remove a slight amount of water therein and a method for producing the filter material.

BACKGROUND ART

Filaments, nonwoven fabrics, membranes, and the like have been conventionally used as filter materials for filtering mediums (e.g., filters) to remove fine particles contained in gas or liquid. Among them, the membrane filter materials have a uniform micropore diameter and can present precision filtration. However, the filtration is taken place on the filter surface, whereby a violent pressure drop due to the dust collected on the surface instantly occurs. Therefore, the frequent replacement of the membrane filter material is inevitable. On the other hand, the fiber filter materials have an ununiform fiber diameter and distribution of fiber. It is thus difficult to form a sheet having a uniform micropore diameter from the fiber filter material. However, a sheet formed from the fiber filter material has a large amount of voids therein, whereby a pressure drop due to the dust trapped in the voids occurs slowly or moderately. Therefore, the sheet formed from the fiber filter material has an advantage (e.g. , a long serves life) and has been widely used.
The fiber filter material is particularly used as a filter material for a vehicle such as an automobile (e.g., a liquid fuel filter material). The examples of the fiber filter material include a cellulose-series fiber, a spunbonded nonwoven fabric, and a meltblown nonwoven fabric. The cellulose-series fiber is quite widely used as a liquid fuel filter material. The conventional requirements for the liquid fuel filter material are an ability of collecting or filtrating (or an efficiency of collecting) microparticles having a particle diameter of about 10 $\mu$m in addition to stability and durability. However, under ongoing tight emission regulations of soot or a nitrogen oxide generated after combustion of fuel, it is urgent to make the liquid fuel filter material more efficient, i.e., more capable of collecting a microparticle having a particle diameter not more than a few or several micrometers. The emission control demands a more efficient removal of an impurity or impurities which is or are generated from the combustion of the liquid fuel, particularly a light oil used as a diesel engine fuel. It is known that the most effective method for making the liquid fuel filter more efficient is increasing the density of the nonwoven fabric by using a fiber having a much smaller fiber diameter.
However, the conventional filter materials cannot eliminate the problems mentioned above. For example, the filter formed from a cellulose-series fiber has not only an insufficient ability of removing the microparticles but also a poor durability. Moreover, the spunbonded nonwoven fabric comprising a continuous fiber has an excellent mechanical strength. However, the large fiber diameter reduces the surface area of the nonwoven fabric, whereby the nonwoven fabric has a poor collection efficiency.
In addition, a meltblown nonwoven fabric is widely used as a filter material by making the use of the small fiber diameter and the large surface area due to the small fiber diameter. However, the meltblown nonwoven fabric itself has a low mechanical strength, and cannot fully serve particularly as a fuel filter material requiring a high durability. For that reason, the meltblown nonwoven fabric is used with the spunbonded nonwoven fabric or the like to form a laminate. Furthermore, the minimum fiber diameter of the meltblown nonwoven fabric is about 2 $\mu$m. In order to collect or trap dust having a much smaller particle diameter, the dust collection efficiency of the nonwoven fabric is enhanced by subjecting the nonwoven fabric to a calendering or the like to adjust the density of the nonwoven fabric. However, the obtained high-density nonwoven fabric often has a poor liquid permeability.
In order to eliminate the shortcomings of the filter materials mentioned above, a method for making the fiber constituting a spunbonded nonwoven fabric, which is a continuous fiber nonwoven fabric, ultra fine (or extremely thin) has been proposed. Specifically, a known method for making the fiber more ultra fine includes a weight reduction by alkali, a solvent extraction, or the like. That is, in these methods, a nonwoven fabric which comprises a conjugate fiber comprising at least two polymer components which are incompatible with each other is treated with a chemical agent to separate or divide the constituting fiber in the fiber length direction. In this case, the nonwoven fabric has at least two components, and one of the components is removed with the use of the chemical agent to produce a nonwoven fabric which comprises an ultra-fine fiber comprising the other component alone. However, the component other than the component to be removed is adversely affected by the chemical treatment or the like at the treatment. In order to avoid such a problem, the combination of the components constituting (or contained in) the conjugate fiber is often limited. Therefore, forming the fiber which is ultra fine enough is usually difficult to achieve.
On the other hand, a polyvinyl alcohol (hereinafter the term is sometimes abbreviated as PVA) is a water-soluble polymer. It is known that the degree of water solubility in the PVA can be changed based on a basic bone structure thereof, a molecular structure thereof, a form thereof, and various modifications. Further, it is recognized that the PVA has biodegradability. Since the harmony between synthetic products and natural world has been a major issue for global environment recently, the PVA and PVA-series fibers having such basic performances have become a center of attraction.

The inventors of the present invention proposed, in Japanese Patent Application Laid-Open No. 262456/2001 (JP-2001-262456A, Patent Document 1), a method for producing a conjugate continuous fiber composed of a PVA and other thermoplastic polymer(s) by melt spinning and simultaneously making the obtained conjugate continuous fiber into a nonwoven fabric; and a nonwoven fabric which comprises a continuous fiber having a modified cross-sectional form (or shape) or an extream-thinfineness, obtained by extractive removing the PVA from the nonwoven fabric with water. Furthermore, Japanese Patent Application Laid-Open No. 89851/2006 (JP-2006-89851A, Patent Document 2) proposes a method for producing a nonwoven fabric comprising an ultra-fine continuous fiber and having a highly durable hydrophilicity. The method comprises a step of subjecting a nonwoven fabric comprising a conjugate continuous fiber similar to the nonwoven fabric in Patent Document 1 to an extraction under a condition adjusted so as to allow part of a PVA to remain in the nonwoven fabric. Moreover, Patent Document 2 discloses that the nonwoven fabric comprising the ultra-fine continuous fiber, which is obtained by the above mentioned method, is suitable for a filter material.

However, the formation of the ultra-fine fiber by the methods described in these documents is insufficient. Accordingly, the nonwoven fabrics comprising such a fiber are not suitable for an efficient liquid fuel filter which requires both of dust collection efficiency and liquid permeability, particularly, for a diesel engine fuel filter requiring a much higher efficiency in terms of the emission controls.

Incidentally, a filter material which comprises a fiber having a fiber diameter of not more than 1 $\mu$m can easily be produced by using a glass fiber, and such a filter material shows a high dust collecting efficiency. However, a sheet-form article of the filter material comprises a binder component, and depending on the use condition of the article, the component(s) is sometimes eluted. In addition, the break of the glass fiber easily causes falling off of the glass fiber or other fibers.

[Patent Document 1] JP-2001-262456A (Paragraph No. [0039] and Example 14)
[Patent Document 2] JP-2006-89851A (Claims 1, 13 and 19)

DISCLOSURE OF THE INVENTION

PROBLEMS TO BE SOLVED BY THE INVENTION

It is an object of the present invention to provide a filter material having a high dust collection efficiency and liquid permeability and a method for producing the filter material.

It is another object of the present invention to provide a filter material which is almost free from chemical substance elution and falling off of fibers and has an excellent durability even over a long-period use and a method for producing the filter material.

MEANS TO SOLVE THE PROBLEMS

The inventors of the present invention made intensive studies to achieve the above objects and finally found that the preparation of a nonwoven fabric which comprises an ultra-fine continuous fiber and has a bundle of the ultra-fine continuous fiber in an appropriate proportion by controlling the dispersibility of the ultra-fine fiber with adjusting an extraction condition makes it possible to produce a filter material having a high dust collection efficiency and liquid permeability. The present invention was accomplished based on the above-mentioned findings.

That is, the filter material of the present invention is a filter material comprising a nonwoven fabric which comprises an ultra-fine continuous fiber (ultra-fine filament) having a mean fiber diameter of 0.05 to 1. 8 $\mu$m. In the filter material, the nonwoven fabric contains a bundle of the ultra-fine continuous fiber having a mean width of 3 to 100 $\mu$m and an occupancy area ratio of the bundle of the ultra-fine continuous fiber of 1 to 20% in the surface of the nonwoven fabric and satisfies the following formula:

$$100 \times (B)/(A) \geq 5$$

wherein (B) is a tensile strength (kgf/5cm) in each of a longitudinal direction and a width direction of the nonwoven fabric and (A) is a fabric weight (g/m$^2$).

In the filter material, the ultra-fine continuous fiber may comprise a water-insoluble thermoplastic resin (e.g., a polyester-series resin), and the nonwoven fabric may contain a water-soluble thermoplastic resin (e.g., a modified polyvinyl alcohol containing at least one unit, in a proportion of 0.1 to 20 mol%, selected from the group consisting of an $\alpha$-olefin unit having carbon number of not more than four and a $C_{1-4}$alkyl vinyl ether unit, particularly a modified polyvinyl alcohol containing an ethylene unit in a proportion of 3 to 20 mol%) in a proportion of about 0.01 to 2% by mass. In the above-mentioned filter material, the ultra-fine continuous fibers may be entangled with each other by a needle-punching or a water-jetting. In the filter material of the present invention, the nonwoven fabric may further be laminated on a woven fabric or a nonwoven fabric. In addition, the filter material is suitable as a filter material for a liquid fuel such as a filter material for a diesel engine fuel.

The present invention also includes a method for producing a filter material comprising a nonwoven fabric which comprises an ultra-fine continuous fiber having a mean fiber diameter of 0.05 to 1. 8 $\mu$m. The method comprises removing a water-solublethermoplastic resin from a nonwoven fabric or nonwoven web which comprises a conjugate (bi-component) continuous fiber comprising the water-soluble thermoplastic resin and a water-insoluble thermoplastic resin for forming the ultra-fine continuous fiber, wherein the nonwoven fabric or nonwoven web comprising the conjugate continuous fiber is treated with a hydrophilic solvent for dissolving or eluting the water-soluble thermoplastic resin therefrom and for allowing part of the water-soluble thermoplastic resin to remain in the nonwoven fabric. In this method, both of a first surface and a second surface of the nonwoven fabric comprising the conjugate continuous fiber may be covered with water-permeable sheets, and the nonwoven fabric may be subjected to a successive removal of the water-soluble thermoplastic resin with being sandwiched with the water-permeable sheets. Furthermore, the nonwoven fabric may be treated for dissolving or eluting the water-soluble thermoplastic resin at a temperature of not higher than 60°C. The temperature may be then gradually increased, and the nonwoven fabric may be treated therefor at a temperature in the range of 80 to 110°C in the end. Moreover, the above-mentioned dissolving or eluting treatment may be conducted in the presence of a surfactant (particularly, a nonionic surfactant).

EFFECTS OF THE INVENTION

Since the filter material of the present invention comprises an ultra-fine continuous fiber and has a bundle of the ultra-fine continuous fiber in an appropriate propotion therein, the filter material has a high dust collecting efficiency (or filtration efficiency) and liquid permeability (a low resistance to a liquid passing therethrough). Moreover, the filter material is free from a chemical substance elution and falling off of the fibers and has an excellent durability even over a long-period use. Therefore, the filter material is suitable as a filter material for a fuel filter requiring a high efficiencies or performances, particularly for a diesel engine fuel filter.

BRIEF DESCRIPTION OF DRAWINGS

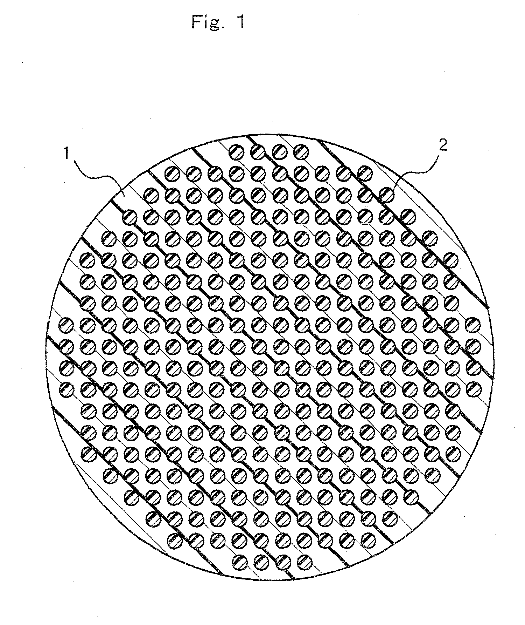

[Fig.1] Fig.1 represents a schematic cross section view of an example of the conjugated fiber used for a production of the fuel filter material of the present invention.

DETAILED DESCRIPTION OF THE INVENTION

The filter material of the present invention comprises a nonwoven fabric comprising an ultra-fine continuous fiber. The mean fiber diameter of the ultra-fine continuous fiber may be about 0.05 to 1.8 $\mu$m, preferably about 0.1 to 1.5 $\mu$m, and more preferably about 0.2 to 1 $\mu$m. An ultra-fine continuous fiber having a mean fiber diameter of more than 1.8 $\mu$m is a fiber which is not fine enough. Since a fiber material comprising such a fiber has a low surface area, the fiber material has an extremely poor dust collecting efficiency (or filtration efficiency). On the other hand, an ultra-fine continuous fiber having a mean fiber diameter of less than 0.05 $\mu$m is difficult to process, whereby a stable production of the nonwoven fabric comprising such an ultra-fine continuous fiber tends to be difficult.

The above-mentioned nonwoven fabric has a bundle of the ultra-fine continuous fiber having a predetermined width in an appropriate proportion. The mean width of the bundle of the ultra-fine continuous fiber (the mean width of the maximum and minimum widths measured with respect to the length direction of the bundle of the fiber) may be about 3 to 100 $\mu$m, preferably about 6 to 90 $\mu$m, and more preferably 10 to 80 $\mu$m (particularly about 20 to 80 $\mu$m). A bundle of the fiber having a mean width of less than 3 $\mu$m behaves like a mono fiber and shows very little function as a bundle of the fiber. On the other hand, the existence of a bundle of the fiber having a mean width of more than 100 $\mu$m in the filter material causes not only a decrease in dust collection efficiency which a filter requires, but also a decrease in void ratio of the nonwoven fabric. Therefore, it is preferred that the filter material be substantially free from such a bundle of the fiber.

The nonwoven fabric contains the bundle of the ultra-fine continuous fiber in an appropriate proportion. That is, in the nonwoven fabric, the occupancy ratio (area ratio) of the bundle of the ultra-fine continuous fiber having a mean width of 3 to 100 $\mu$m is 1 to 20%, relative to the nonwoven fabric surface. The occupancy ratio (area ratio) of the bundle of the ultra-fine continuous fiber can be selected according to applications. The occupancy ratio may be low (e.g., about 1 to 5%) for achieving a high minute dust collection efficiency, or may be preferably about 3 to 18%, and more preferably about 5 to 15%. The nonwoven fabric having an occupancy ratio in the range mentioned above is advantageously used to produce a filter (e.g., a liquid fuel filter) having an enhanced dust collection efficiency, liquid permeability, and durability. The occupancy ratio of the bundle of the fiber mentioned above of less than 1% means that in the nonwoven fabric, the ultra-fine continuous fibers hardly form a bundle and almost completely separated from each other as a mono fiber. In this case, a filter material, which is formed from such a nonwoven fabric, has a low void ratio and a high resistance to a liquid passing therethrough (a low liquid permeability). On the other hand, when the occupancy ratio of the bundle of the fiber is more than 20%, the ultra-fine continuous fiber fails to show its original efficiency or performances sufficiently. Therefore, the nonwoven fabric is a filter material having a poor dust collecting efficiency. Incidentally, in the present invention, the ratio of the bundle of the fiber is determined based on the occupancy ratio of the bundle of the fiber relative to or in the nonwoven fabric surface. The distribution of the bundle of the fiber in the nonwoven surface usually corresponds to the distribution of the bundle of the fiber in the entire nonwoven fabric.

Specifically, the occupancy ratio of the bundle of the ultra-fine continuous fiber is measured based on an electron micrograph of the nonwoven fabric surface. In the present invention, the measured bundle of the fiber on the micrograph of the nonwoven fabric surface is a group of fibers not only having the mean width mentioned above but also comprising a plurality of the fibers side by side (in a parallel direction) or the fibers laminated on each other, in the same direction over a length of not less than 10 $\mu$m.

The nonwoven fabric of the present invention comprises a continuous fiber. The nonwoven fabric comprising the continuous fiber is highly suitable for production compared with other nonwoven fabric, for example, a dry-laid nonwoven fabric obtained by hydroentangling or needle-punchingaweb composedof a staple fiber orawet-laid nonwoven fabric obtained by a paper-making method from a shortcut fiber dispersed in water. Further, since the nonwoven fabric comprises a continuous fiber, falling off of the fiber from the nonwoven fabric hardly occurs. Therefore the nonwoven fabric is suitable for a filter material. Furthermore, the strength of the nonwoven fabric is generally higher than that of a nonwoven fabric comprising a staple fiber or that of a nonwoven fabric comprising a shortcut fiber. For that reason also the nonwoven fabric is suitable for a filter material.

Since the nonwoven fabric has an appropriate distribution of the bundle of the fiber, the nonwoven fabric has outstanding mechanical properties. It is necessary for the nonwoven fabric that the tensile strength (B) [kgf/5cm] in the longitudinal direction and the width direction of the nonwoven fabric comprising the ultra-fine continuous fiber of the present invention and the fabric weight (A) [g/m$^2$] satisfy the following formula :100x(B)/(A)≥5, preferably 100x(B)/(A) ≥10 (e.g., 100≥100x(B)/(A)≥10), and more preferably (B)/(A)≥15 (e.g., 50≥100x(B)/(A)≥15). In the case of 100x(B)/(A) <5, the nonwoven fabric has an insufficient strength and cannot perform a function as a filter (e.g., a strength required as a fuel filter) fully enough by itself.

On the other hand, it is preferred that each of the tensile strengths (B) [kgf/5cm] and the fabric weight (A) [g/m$^2$] satisfy the formula 100x(B)/(A)≤100. In the case where the value of the formula [100x(B)/(A)] is excessively large, the nonwoven fabric sometimes has a poor softness (or flexibility). Incidentally, the value of the formula [100x(B)/(A)] can be changed depending on a mean fiber diameter, a drawing rate of fiber spinning, an entanglement and thermocompression condition, and others. The value of the formula [100x(B)/(A)] depends on the mean fiber diameter, the drawing rate of fiber spinning, the entanglement and thermocompression condition, or the like.

The ultra-fine continuous fiber in the nonwoven fabric comprising the ultra-fine continuous fiber may comprise a water-insoluble thermoplastic resin and a slight amount of a water-soluble thermoplastic resin. In this case, the surface of the fiber comprising the water-insoluble thermoplastic resin may have the water-soluble thermoplastic resin adhered thereon. That is, it is preferred that the water-soluble thermoplastic resin remaining partly in the nonwoven fabric impart hydrophilicity or water absorbency to the nonwoven fabric (fiber surface). The particularly preferred nonwoven fabric is a nonwoven fabric obtained by a method for producing the nonwoven fabric comprising a step of removing the water-soluble thermoplastic resin from a nonwoven fabric or a nonwoven web which comprises a conjugate continuous fiber comprising the water-soluble thermoplastic resin and the water-insoluble thermoplastic resin. According to the present invention, in the use of the filter material having a hydrophilicity obtained in this manner as an aqueous (water-based) liquid filter, an initial pressure drop is greatly prevented. In the use of the filter material mentioned above as an oil-based liquid filter (such as a liquid fuel filter), a slight amount of an aqueous component which is an impurity for the fuel is efficiently removed.

Moreover, the durability of the water-soluble thermoplastic resin (particularly a water-soluble thermoplastic PVA) allowed to remain partly in the nonwoven fabric is higher than that of a water-soluble thermoplastic resin contained in a nonwoven fabric by applying an aqueous solution of the water-soluble thermoplastic resin to the nonwoven fabric and drying the nonwoven fabric. Such a highly durable hydrophilicity is achieved by, as described later, allowing the water-soluble thermoplastic resin constituting an ultra-fine fiber having a specific fiber diameter to remain in a nonwoven fabric comprising an ultra-fine fiber and drying the nonwoven fabric under a specific condition, or the like.

The proportion of the water-soluble thermoplastic resin in the nonwoven fabric comprising the ultra-fine continuous fiber of the present invention is not more than 4% by mass (e.g., about 0.0001 to 4% by mass), for example, about 0.01 to 2% by mass, preferably about 0.02 to 1.5% by mass, and more preferably about 0.03 to 1% by mass (particularly about 0.05 to 0.8% by mass), in the nonwoven fabric. A nonwoven fabric having an excessively large proportion of the water-soluble thermoplastic resin has a large amount of the elution of the water-soluble thermoplastic resin during its use as a filter. In addition, an excessively large proportion of the water-soluble thermoplastic resin causes a poor dispersion of the ultra-fine fiber, whereby the nonwoven fabric becomes less soft or flexible. On the other hand, a nonwoven fabric having an excessively small proportion of the water-soluble thermoplastic resin does not have an enough hydrophilicity, whereby the nonwoven fabric cannot collect or remove the aqueous component(s) well.

The water-soluble thermoplastic resin remaining in the nonwoven fabric is not particularly limited to a specific one as long as the resin is a solid at room temperatures and can be dissolved or eluted and removed with a hydrophilic solvent (particularly water) at a temperature of not higher than 1.20°C and be melt-spun. Examples of such awater-soluble thermoplastic resin include a cellulose-series resin (e.g., a $C_{1-3}$alkyl cellulose ether such as a methyl cellulose, a hydroxy$C_{1-3}$alkyl cellulose ether such as a hydroxymethyl cellulose, and a carboxy$C_{1-3}$alkyl cellulose ether such as a carboxymethyl cellulose); a polyalkylene glycol resin (e.g., a poly$C_{2-4}$alkylene oxide such as a polyethylene oxide and a polypropylene oxide); a polyvinyl-series resin (e.g., a polyvinyl pyrrolidone, a polyvinyl ether, a polyvinyl alcohol, and a polyvinyl acetal); an acrylic copolymer and an alkali metal salt thereof [e.g., a copolymer containing a unit composed of an acrylic monomer such as (meth)acrylic acid, a (meth)acrylic acid ester (e.g., hydroxyethyl (meth)acrylate), and (meth)acrylamide]; a vinyl-series copolymer or an alkali metal salt thereof [e.g., a copolymer of a vinyl-series monomer (such as isobutylene, styrene, ethylene, and vinyl ether) and an unsaturated carboxylic acid or an anhydride thereof (such as maleic anhydride)]; a resin having a solubilizing substituent, or an alkali metal salt thereof (e.g., a polyester, a polyamide and a polystyrene, which are obtained by introducing a substituent such as a sulfonic acid group, a carboxyl group and a hydroxyl group); and others. These water-soluble thermoplastic resins may be used singly or in combination.

Among these water-soluble thermoplastic resins, the preferred water-soluble thermoplastic resin include a polyvinyl alcohol-series resin such as a polyvinyl alcohol (PVA), particularly a water-soluble thermoplastic PVAsince such a resin has an excellent melt-spinning stability and particularly an excellent water absorbent property after immersion-treating in a water of 80°C for 3 minutes.

The PVA is not particularly limited to a specific one as long as the PVA can be melt-spun. The PVA includes, for example, not only a PVA homopolymer but also a modified PVA (e.g. , a PVA modified by copolymerization of a PVA as a main chain and a PVA modified in which a functional group is introduced to a terminal or side chain of a PVA). A typical and commercially available PVA cannot be melt spun because of having a melting temperature close to a thermal decomposition temperature thereof (in other words, the PVA has no thermoplasticity), and a variety of treatments is required in order to impart water solubility and thermoplasticity to the PVA.

The viscosity-average degree of polymerization (this term hereinafter is sometimes abbreviated polymerization degree) of the water-soluble thermoplastic resin (e.g., a water-soluble thermoplastic PVA) is, for example, about 200 to 800, preferably about 230 to 600, and more preferably about 250 to 500. In the water-soluble thermoplastic resin (e.g., a PVA) used for an ordinary fiber, the fiber strength is higher as the polymerization degree is higher. Accordingly, the resin usually has a polymerization degree of not less than 1500 (for example, a polymerization degree of about 1700 or about 2100). However, in the present invention, a water-soluble thermoplastic resin having an excessively low polymerization degree (200 to 800) (e.g., a water-soluble thermoplastic PVA) may practically be used. When the polymerization degree is much lower than that mentioned above, spinnability in melt spinning of fibers is insufficient. As a result, a satisfactory nonwoven fabric comprising a conjugate continuous fiber cannot be obtained sometimes. On the other hand, a water-soluble thermoplastic resin having an excessively large polymerization degree has an excessively high melt viscosity, whereby it is difficult to extrude the polymer from a spinning nozzle. In this case, a satisfactory nonwoven fabric comprising a conjugate continuous fiber cannot be obtained sometimes. The polymerization degree of the water-soluble thermoplastic resin depends on the concentration of solvent used in a polymerization reaction, the rate of polymerization, the conversion of monomer to polymer, the polymerization temperature, or the like. The polymerization degree is decreased by increasing the concentration of solvent used in a polymerization reaction and the conversion of monomer to polymer.

The polymerization degree (P) of the water-soluble thermoplastic resin is measured in accordance with JIS-K6726. For example, the polymerization degree of the water-soluble thermoplastic PVA is determined based on a limiting viscosity [η] (dl/g) of the resin and the following formula:

$$P=([\eta] \times 10^3 / 8.29)^{(1/0.62)}$$

wherein the limiting viscosity is measured in a water of 30°C after completely re-saponifying and purifying the water-soluble thermoplastic PVA.

The saponification degree of the water-soluble thermoplastic PVA used in the present invention is, for example, about 90 to 99.99 mol%, preferably about 92 to 99.9 mol%, and more preferably about 94 to 99.8 mol%. A water-soluble thermoplastic PVA having an excessively small saponification degree has a low heat stability. Therefore, the thermal decomposition or gelation thereof sometimes prevents stable conjugated (or composite) melt spinning. On the other hand, a water-soluble thermoplastic PVA having an excessively large saponification degree is difficult to produce stably. The saponification degree is increased by increasing the amount of a saponification catalyst(s), raising the temperature of saponification reaction, and extending the saponification reaction time.

The water-soluble thermoplastic PVA is obtained by saponifying a vinyl ester unit of a vinyl ester-series polymer. Examples of a vinyl compound monomer for forming the vinyl ester unit include vinyl formate, vinyl acetate, vinyl propionate, vinyl valerate, vinyl caprate, vinyl laurate, vinyl stearate, vinyl benzoate, vinyl pivalate and vinyl versatate. These vinyl compound monomers may be used singly or in combination. Among them, the preferred vinyl compound monomer includes a vinyl ester of a lower aliphatic carboxylic acid, such as vinyl acetate and vinyl propionate, usually vinyl acetate since the water-soluble thermoplastic PVA is easily produced from such a vinyl compound monomer.

The water-soluble thermoplastic resin (e.g., a water-soluble thermoplastic PVA) constituting the nonwoven fabric of the present invention may be a homopolymer or a modified resin which is a resin modified by introducing a copolymerizable unit thereinto (e.g., a modified PVA). The modified resin (e.g., a water-soluble thermoplastic PVA) is preferably used since such a resin has conjugated melt spinning property and hydrophilicity.

The kind of the copolymerizable monomer in the modified PVA includes, for example, an $\alpha$-olefin (e.g., an $\alpha$-$C_{2-10}$olefin such as ethylene, propylene, 1-butene, isobutene and 1-hexene), (meth)acrylic acid and a salt thereof, a (meth)acrylic ester [e.g., a $C_{1-6}$alkyl (meth)acrylate such as methyl (meth)acrylate, ethyl (meth)acrylate, n-propyl (meth) acrylate and i-propyl (meth)acrylate], a (meth)acrylamide derivative [e.g., (meth)acrylamide and an N-$C_{1-6}$alkyl(meth) acrylamide such as N-methyl(meth)acrylamide and N-ethyl(meth)acrylamide], a vinyl ether (e. g. , a $C_{1-10}$alkyl vinyl ether such as methyl vinyl ether, ethyl vinyl ether, n-propyl vinyl ether, i-propyl vinyl ether and n-butyl vinyl ether), a hydroxyl group-containing vinyl ether(e.g., a $C_{2-10}$alkanediol-vinyl ether such as ethylene glycol vinyl ether, 1,3-propanediol vinyl ether and 1, 4-butanediol vinyl ether), an allyl ester (e.g., allyl acetate), an allyl ether (e.g., a $C_{1-10}$alkyl allyl ether such as propyl allyl ether, butyl allyl ether and hexyl allyl ether), a monomer having an oxyalkylene group (e.g., a vinyl-series monomer having a polyoxy$_{2-6}$alkylene group, such as a polyoxyethylene group, a polyoxypropylene group and a polyoxybutylene group), a vinylsilane (e.g., a vinyltri$C_{1-4}$alkoxysilane such as vinyltrimethoxysilane), a hydroxyl group-containing $\alpha$-olefin and an esterified product thereof (e.g., a $C_{3-12}$alkenol or an esterified product thereof, such as isopropenyl acetate, 3-buten-1-ol, 4-penten-1-ol, 5-hexen-1-ol, 7-octen-1-ol, 9-decen-1-ol and 3-methyl-3-buten-1-ol), an N-vinylamide (e.g., N-vinylformamide, N-vinylacetamide and N-vinylpyrrolidone), an unsaturated carboxylic acid (e.g., fumaric acid, maleic acid, itaconic acid, citraconic acid, maleic anhydride, itaconic anhydride, and citraconic anhydride), a sulfonic acid group-containing monomer (e. g. , ethylenesulfonic acid, allylsulfonic acid, methallylsulfonic acid, and 2-acrylamide-2-methylpropanesulfonic acid), and a cationic group-containing monomer [e.g., a vinyloxytetra$C_{1-10}$alkylammonium chloride such as vinyloxyethyltrimethylammonium chloride and vinyloxybutyltrimethylammonium chloride; a vinyloxytri$C_{1-10}$alkylamine such as vinyloxyethyldimethylamine and vinyloxymethyldiethylamine; an N-acrylamidetetra$C_{1-10}$alkylammonium chloride such as N-acrylamideethyltrimethylammonium chloride and N-acrylamide-butyltrimethylammonium chloride; an N-acrylamidedi$C_{1-10}$alkylamine such as N-acrylamidedimethylamine; a (meth) allyltri$C_{1-10}$alkylammonium chloride such as (meth)allyltrimethylammonium chloride; a di$C_{1-3}$alkylallylamine such as dimethylallylamine; and an allyl$C_{1-3}$alkylamine such as allylethylamine].

These copolymerizable monomers may be used singly or in combination. The content of the copolymerizable monomer unit(s) is usually not more than 20 mol%, letting the number of moles of all units constituting the modified PVA (or copolymer PVA) be 100%. Further, in order to make the use of advantages obtained by the copolymerization of the PVA with copolymerizable unit, it is preferred that the copolymerizable unit be not less than 0.01 mol% in the modified PVA.

In the modified PVA, among these copolymerizable monomers, the following monomer is preferred because of its ready availability. The examples of such a monomer include an $\alpha$-$C_{2-6}$olefin such as ethylene, propylene, 1-butene, isobutene and 1-hexene; a $C_{1-6}$alkyl vinyl ether such as methyl vinyl ether, ethyl vinyl ether, n-propyl vinyl ether, i-propyl vinyl ether and n-butyl vinyl ether; a $C_{2-6}$alkanediol-vinyl ether such as ethylene glycol vinyl ether, 1,3-propanediol vinyl ether and 1,4-butanediol vinyl ether; an allyl ester such as allyl acetate; a $C_{1-6}$alkyl allyl ether such as propyl allyl ether, butyl allyl ether and hexyl allyl ether; an N-vinylamide such as N-vinylformamide, N-vinylacetamide and N-vinylpyrro-lidone; a $C_{2-4}$oxyalkylene group-containing monomer such as a polyoxyethylene; and a $C_{3-10}$alkenol such as 3-buten-1-ol, 4-penten-1-ol, 5-hexen-1-ol, 7-octen-1-ol, 9-decen-1-ol and 3-methyl-3-buten-1-ol.

An $\alpha$-olefin having carbon atom(s) of not more than four, such as ethylene, propylene, 1-butene and isobutene, and a $C_{1-4}$alkyl vinyl ether such as methyl vinyl ether, ethyl vinyl ether, n-propyl vinyl ether, i-propyl vinyl ether, or n-butyl vinyl ether is particularly preferred since such a copolymerizable monomer has a good copolymerization property, a water-soluble thermoplastic resin modified with the monomer has high spinning properties in melt blending, and a fiber comprising such a modified resin has a good physical property. The unit derived from the $\alpha$-olefin having carbon atom(s) of not more than four and that derived from the $C_{1-4}$ alkyl vinyl ether preferably exist in a proportion of 0.1 to 20 mol% in the water-soluble thermoplastic PVA, and more preferably exist in a proportion of 0.5 to 18 mol% therein.

Further, it is most preferred that an $\alpha$-olefin be ethylene because such an $\alpha$-olefin improves the physical properties of fiber. In particular, it is preferred that the ethylene unit exist in a proportion of 3 to 20 mol% in the water-soluble thermoplastic PVA. It is more preferred to use a modified PVA into which the ethylene unit is introduced in a proportion of 5 to 18 mol% therein.

The water-soluble thermoplastic resin (e.g., a water-soluble thermoplastic PVA) used in the present invention may be obtained by a known method, such as a bulk polymerization, a solution polymerization, a suspension polymerization and an emulsion polymerization. Among them, the bulk polymerization or solution polymerization conducted in the absence or presence of a solvent (such as an alcohol) is usually adopted. For example, the alcohol used as a solvent in a solution polymerization of the water-soluble thermoplastic PVA includes a lower alcohol such as methyl alcohol, ethyl alcohol and propyl alcohol. An initiator used in the copolymerization includes a known initiator, e.g., an azo-series initiator such as $\alpha,\alpha$'-azobisisobutyronitrile and 2,2'-azobis(2,4-dimethyl-valeronitrile), and a peroxide-series initiator such as benzoyl peroxide and n-propyl peroxycarbonate. These initiators may be used singly or in combination. The polymerization temperature is not particularly limited to a specific one. The suitable polymerization temperature is in the range of about 0 to 200°C (particularly about 20 to 150°C).

The content of an alkali metal ion in the water-soluble thermoplastic resin (e.g., a water-soluble thermoplastic PVA) used in the present invention is, for example, about 0.00001 to 0.05 part by mass, preferably about 0.0001 to 0.03 part by mass, and more preferably about 0. 0005 to 0.01 part by mass, in terms of sodium ion relative to 100 parts by mass of the water-soluble thermoplastic resin (e.g., a water-soluble thermoplastic PVA). For example, in the case of a water-soluble thermoplastic PVA, it is difficult from an industrial view point to produce a PVA in which the content of the alkali metal ion is less than 0.00001 part by mass. Moreover, an excessively high content of the alkali metal ion significantly brings about polymer decomposition, gelation and fiber breakage in conjugated melt spinning, whereby such a resin cannot be formed stably into a fiber sometimes. Incidentally, the alkali metal ion includes potassium ion, sodium ion, and others.

In the present invention, a method for allowing the water-soluble thermoplastic PVA to contain a specific amount of an alkali metal ion is not particularly limited to a specific one. Regarding the water-soluble thermoplastic PVA, examples of a method for allowing the PVA to contain an alkali ion include a method which comprises obtaining a PVA by polymerization and then adding a compound containing an alkali metal ion to the PVA; and a method for controlling an alkali ion content in a PVA, which comprises allowing the PVA to contain an alkali metal ion by using an alkaline substance containing an alkali metal ion as a saponifying catalyst on saponification of a vinyl ester polymer in a solvent, and washing the obtained PVA with a washing solution. The latter method is more preferred. Incidentally, the content of the alkali metal ion may be determined by an atomic absorption method.

The alkaline substance used as the saponifying catalyst includes potassium hydroxide, sodium hydroxide, and others. The proportion (molar ratio) of the alkaline substance used as the saponifying catalyst is preferably 0.004 to 0.5 mol and particularly preferably 0.005 to 0.05 mol, relative to 1 mol of a vinyl acetate unit in a polyvinyl acetate. The saponifying catalyst may be added all at once at an early stage of the saponification reaction, or a part of the catalyst may be added at the early stage and the rest may be additionally added during the course of the saponification reaction.

The solvent for the saponification reaction includes an alcohol such as methanol, an ester such as methyl acetate, a sulfoxide such as dimethyl sulfoxide, an amide such as dimethylformamide, and others. These solvents may be used singly or in combination. Among them, it is preferred to use an alcohol such as methanol, more preferred to use methanol whose water content is controlled to about 0.001 to 1% by mass (preferably about 0.003 to 0.9% by mass, and more preferably 0.005 to 0.8% by mass). Examples of the washing solution include an alcohol such as methanol, a ketone such as acetone, an ester such as methyl acetate and ethyl acetate, a hydrocarbon such as hexane, and water. Among them, it is more preferred to use methanol, methyl acetate or water alone, or to use a mixture thereof.

The amount of the washing solution is adjusted so that the content of the alkali metal ion is satisfied. The amount of the washing solution is usually preferably about 300 to 10000 parts by mass and more preferably about 500 to 5000 parts by mass, relative to 100 parts by mass of the water-soluble thermoplastic PVA. The washing temperature is preferably about 5 to 80°C, and more preferably about 20 to 70°C. The washing time is preferably about 20 minutes to 100 hours, and more preferably about one hour to 50 hours.

Moreover, within the range in which the objects or effects of the present invention are not deteriorated, to the water-soluble thermoplastic resin (e.g., the water-soluble thermoplastic PVA) can be added a plasticizer in order to adjust the melting point or the melt viscosity. As the plasticizer, conventionally known plasticizers may be used, and it is preferred to use diglycerin, an ester of a polyglycerin with an alkylmonocarboxylic acid, and a compound obtained by adding ethylene oxide and/or propylene oxide to a glycol. Among them, a compound obtained by adding about 1 to 30 mol of ethylene oxide relative to 1 mol of sorbitol is preferred.

The water-insoluble thermoplastic resin constituting the ultra-fine continuous fiber is not particularly limited to a specific one as long as the resin is not dissolved in a hydrophilic solvent (particularly water) and can be melt-spun.

For example, the water-insoluble thermoplastic resin includes a polyester-series resin [for example, an aromatic polyester (e.g., a polyalkylene arylate-series resin such as a polyethylene terephthalate, a polytrimethylene terephthalate, a polybutylene terephthalate and a polyhexamethylene terephthalate), an aliphatic polyester (e. g. , an aliphatic polyester and a copolymer thereof, such as a polylactic acid, a polyethylene succinate, a polybutylene succinate, a polybutylene succinate adipate, a hydroxybutylate-hydroxyvalerate copolymer and a polycaprolactone), a polyamide-series resin (e.g., an aliphatic polyamide and a copolymer thereof, such as a polyamide 6, a polyamide 66, a polyamide 610, a polyamide 10, a polyamide 12 and a polyamide 6-12), a polyolefinic resin (e.g., a polyolefin and a copolymer thereof, such as a polypropylene, a polyethylene, an ethylene-propylene copolymer, a polybutene and a polymethylpentene), a water-insoluble modified polyvinyl alcohol containing an ethylene unit of more than 20 mol% to not more than 70 mol%, a thermoplastic elastomer (e.g., a polystyrenic, a polydiene-series, a polyolefinic, a polyester-series, a polyurethane-series, and a polyamide-series elastomer), a vinyl halide-series resin (e.g., a vinyl chloride-series resin, and a fluorine-containing resin), and others. These water-insoluble thermoplastic resins may be used singly or in combination.

Among these water-insoluble thermoplastic resins, the following resin is preferred because of easiness of conjugated spinning with the water-soluble thermoplastic resin (particularly the water-soluble thermoplastic PVA). The examples of such a water-insoluble thermoplastic resin include a polyester-series resin (in particular a polyC$_{2-4}$alkylene arylate-series resin such as a polyethylene terephthalate-series resin, a polypropyrene terephthalate-series resin, a polybuthylen terephthalate-series resin, or polyethylnen naphthalate-series resin, and an aliphatic polyester-series resin such as a polylactic acid), a polyamide-series resin (in particular an aliphatic polyamide-series resin such as a polyamide 6 and a polyamide 66), a polyolefinic resin (in particular a polyC$_{2-4}$olefinic resin such as a polypropylene-series resin and a polyethylene-series resin), and a modified polyvinyl alcohol containing an ethylene unit of 25 to 70 mol%. In order to allow the water-soluble thermoplastic resin (e.g., the water-soluble thermoplastic PVA) to remain in the nonwoven fabric at a specific rate after extracting by a hydrophilic solvent, the water-insoluble thermoplastic resin may be a resin having a reactive group to the water-soluble thermoplastic resin to some degree. In particular, in the case of using the water-soluble thermoplastic PVA as the water-soluble thermoplastic resin, the water-insoluble thermoplastic resin may be a polyester-series resin, a modified polyvinyl alcohol, and others since such a resin has a crystallinity similar to that of the water-soluble thermoplastic PVA and an excellent spinnability. In particular, the water-insoluble thermoplastic resin may be an aromatic polyester-series resin since such a resin imparts an excellent thermal resistance in terms of a requirement for a liquid fuel filter to a nonwoven fabric.

Among the aromatic polyester-series resins, the following resin is preferred since such a resin has a relatively low malting point and an excellent spinnability. The examples of the resin include a polybutylene terephthalate-series resin, a modified polyC$_{2-4}$alkylenen arylate-series resin (e.g., a modified polyethylene terephthalate-series resin and a modified polybutylene terephthalate-series resin). The modified polyC$_{2-4}$alkylene arylate-series resin includes, for example, a polyC$_{2-4}$alkylene arylate-series resin modified by copolymerization with a copolymerizable component such as other aromatic dicarboxylic acids (e.g., isophthalic acid and sodium 5-sulfoisophthalate) or an aliphatic dicarboxylic acid (e.g., sebacic acid and adipic acid). The proportion of the polymerizable component is about 50 mol% or less, preferably about 0.1 to 30 mol%, and more preferably about 0.5 to 20 mol% (particular about 1 to 10 mol%) in the polyester-series resin. The modified polyC$_{2-4}$alkylene arylate-series resin may include, for example, a polyethylene terephthalate-series resin modified with isophthalic acid and a modified polybutylene terephthalate-series resin modified with isophthalic acid.

The nonwoven fabric comprising the ultra-fine continuous fiber may optionally contain an additive such as a stabilizer (e.g., a heat stabilizer, an ultraviolet ray absorbing agent, a light stabilizer and an antioxidant), a microparticle, a coloring agent, an antistatic agent, a flame retardant, a plasticizer, a lubricant, and an agent for retarding crystallization rate, as long as the objects or effects of the present invention are not deteriorated. These additives may be used singly or in combination. These additives may be added to the water-insoluble thermoplastic resin and/or the water-soluble thermoplastic resin before the extractive removal of the water-soluble thermoplastic resin or to the water-insoluble thermoplastic resin after the extractive removal of the water-soluble thermoplastic resin. In particular, addition of a plasticizer (e.g., a polyhydric alcohol compound such as a glycerine or a sorbitol), an organic stabilizer (such as a hindered phenol), a copper halide compound (such as copper iodide) or an alkali metal halide compound (such as potassium iodide) as a heat stabilizer is preferred because the melt retention stability on the occasion of making the resins into a fiber is improved.

Moreover, the addition of the microparticle (particularly an inactive microparticlesuch asan inorganic microparticle) in combination with other additives in the same manner as mentioned above can improve the spinning property or drawing property. The mean particle diameter of the microparticle is, for example, about 0.01 to 5 $\mu$m (e.g., about 0.01 to 1 $\mu$m), preferably about 0.02 to 3 $\mu$m, and more preferably about 0.02 to 1 $\mu$m. The kind of the microparticle is not particularly limited to a specific one. For example, the microparticle includes an inorganic microparticle such as a silicon-containing compound (e.g., a silica), a metal oxide (e.g., titanium oxide), a metal carbonate (e.g., calcium carbonate) and a metal sulfate (e.g., barium sulfate). The proportion of the microparticle is, for example, about 0.05 to 10% by mass and preferably about 0.1 to 5% by mass, relative to the entire nonwoven fabric. These microparticles may be used singly or in combination. Among these microparticles, silicon oxide (such as a silica), in particular a silica having a mean particle diameter of about 0.02 to 1 μm, is preferred.

Next, the method for producing the nonwoven fabric of the present invention will be explained. The nonwoven fabric comprising the ultra-fine continuous fiber may be produced by dissolving (extracting) or eluting and removing a water-soluble thermoplastic resin from a nonwoven fabric formed from a conjugate continuous fiber comprising the water-soluble thermoplastic resin and a water-insoluble thermoplastic resin, with a hydrophilic solvent.

The nonwoven fabric which comprises a conjugate continuous fiber comprising the water-soluble thermoplastic resin and the water-insoluble thermoplastic resin may be produced efficiently by a method in which melt spinning is directly connected to forming of a nonwoven fabric (a conventional method for producing a spunbonded nonwoven fabric).

As a method for producing a spunbonded nonwoven fabric, for example, there may be mentioned the following method. First, a water-soluble thermoplastic resin and a water-insoluble thermoplastic resin are melt-kneaded independently with different extruders, these molten polymers are continuously guided to a spinning head, respectively, and are made to one, and then the converged flow is discharged from a spinning nozzle orifice with weighing the amount of the converged flow. Next, the discharged thread is cooled by a cooling apparatus, then drawn and made thin by a high-speed air flow using an aspirator (such as an air jet nozzle) so that the object fineness is ensured. Thereafter, a nonwoven fabric web is formed by depositing the thread on a traveling collecting surface with opening the fibers. Finally the web is partially thermocompressed and then wound to give a nonwoven fabric comprising the conjugate continuous fiber.

The cross-sectional form of the conjugate continuous fiber constituting the nonwoven fabric comprising the conjugate continuous fiber (a form of the cross section perpendicular to the longitudinal direction of the fiber) is not particularly limited to a specific one, and may be a modified (or irregular) cross-section [e.g., a hollow form, a flat (or shallow) form, an elliptical form, a polygonal form, a multi-leaves form from tri-leaves to 14-leaves, a T-shaped form, an H-shaped form, a V-shaped form, and a dog bone form (I-shaped form)]. The cross section is usually in the form of a round cross-section. In the present invention, the cross section has a conjugate structure which comprises a phase comprising the water-insoluble thermoplastic resin and a phase comprising the water-soluble thermoplastic resin, in order to form an ultra-fine continuous fiber.

More specifically, it is necessary that the conjugate continuous fiber have a structure in which the water-soluble thermoplastic resin and the water-insoluble thermoplastic resin are separable from each other in the axial (or long) direction of the conjugate continuous fiber. That is, owing to the structure, the water-soluble thermoplastic is dissolved and removed along with the axial direction to give an ultra-fine continuous fiber formed of the remaining water-insoluble thermoplastic resin. Therefore, the conjugate continuous fiber comprises a water-soluble resin phase extending in the axial direction and a plurality of the water-insoluble resin phases extending in the same direction. The conjugate continuous fiber has a conjugate structure, in the cross section, comprising an ultra-fine fiber component comprising the water-insoluble thermoplastic resin, and a water-soluble thermoplastic resin for separating or splitting the component into a plurality of isolated sections. The form (or shape) of the conjugate cross section in the conjugate continuous fiber includes an orange cross-sectional or a fan-shaped form (that is, a form in which a phase comprising a water-insoluble thermoplastic resin and a phase comprising a water-soluble thermoplastic resin are alternately arranged in a radial pattern from the center of the cross section), a laminate-shaped form (that is, a form in which a phase comprising a water-insoluble thermoplastic resin and a phase comprising a water-soluble thermoplastic resin are alternately arranged in a striped pattern), or the like. However, an is lands-in-the-sea-shaped form (that is, a form which comprises a sea component comprising a water-soluble thermoplastic resin and an island component comprising a water-insoluble thermoplastic resin) is preferred since a conjugated fiber having such a form is suitable for producing a fiber which is ultra fine enough and has dispersibility and uniformity.

In the islands-in-the-sea-shaped form, the number of island components constituting the ultra-fine fiber is selected from the range about 5 to 1000 pieces in terms of the suitablity for the production. For a production of ultra-fine fiber, a large number of the island component is preferred. For example, the number of the island component of about 50 to 800 pieces, preferably about 100 to 500 pieces, and more preferably about 200 to 450 pieces (particularly about 250 to 400 pieces) is preferred.

In the conjugate continuous fiber, the proportion (mass ratio) of the water-insoluble thermoplastic resin relative to the water-soluble thermoplastic resin is suitably selected for any purposes and is not particularly limited to a specific one. The ratio [water-insoluble thermoplastic resin/the water-soluble thermoplastic resin] may be selected in the range of about 5/95 to 95/5, and is, for example, about 10/90 to 90/10, preferably about 15/85 to 85/15, and more preferably about 30/70 to 85/15 (particularly about 50/50 to 80/20).

In the present invention, it is necessary to suitably set condition(s) for forming the conjugate continuous fiber constituting the nonwoven fabric according to the combination of polymers, or the form (or shape) of the conjugate cross section. Mainly, it is desired that the condition for forming the fiber be determined, with paying attention to the points mentioned below.

The spinneret temperature is, for example, about (Mp+10)°C to (Mp+80)°C, preferably about (Mp+15)°C to (Mp+70)°C, and more preferably about (Mp+20)°C to (Mp+60)°C, letting a melting point of a polymer having highest or higher melting point among those or than that of the polymers constituting the conjugate continuous fiber to be the Mp. The shear rate ($\gamma$) in fiber-spinning is, for example, about 500 to 25000 sec$^{-1}$, preferably about 1000 to 20000 sec$^{-1}$, and more preferably about 1500 to 10000 sec$^{-1}$. The draft (V) in fiber-spinning is, for example, about 50 to 2000, and preferably about 100 to 1500. Moreover, the polymers constituting the conjugate continuous fiber (one of the polymers is the water-soluble thermoplastic resin and another is the water-insoluble thermoplastic resin) having melt viscosities similar to each other are preferably used in combination since such a combination improves stability of fiber-spinning. Specifically, the melt viscosities of the water-soluble thermoplastic resin and the water-insoluble thermoplastic resin which constitute a conjugate continuous fiber are independently measured for the melt viscosity at a spinneret temperature and a shear rate on nozzle passage in a spinning process, and the melt viscosities are similar to each other. For example, a combination of the polymers having a difference in melt viscosity which is within 2000 poise (preferably within 1500 poise) at a spinneret temperature process and a shear rate of 1000 sec$^{-1}$ in a spinning process is prferably used

The melting point Tm of a polymer in the present invention means a peak temperature of a main endoergic peak observed by a differential scanning calorimeter (DSC: e.g., trade name "TA3000" manufactured by Mettler-Toledo K.K.). The shear rate ($\gamma$) is determined as $\gamma = 4Q/\pi r^3$, wherein "r" (cm) represents a nozzle radius and "Q" (cm$^3$/sec) represents a polymer discharge rate per one orifice. Moreover, the draft "V" is calculated as $V = A \cdot \pi r^2/Q$, wherein "A" (m/min.) represents a drawing rate.

In the production of the conjugate fiber, when the spinneret temperature is excessively lower than the melting point of the polymer constituting the conjugated fiber, which has a melting point higher than another polymer constituting the conjugated fiber (or highest among other polymers constituting the conjugated fiber), the polymer has an excessively high melt viscosity. In this case, a high-speed air flow spinning and thinning is difficult. Moreover, when the spinneret temperature is excessively higher than the melting point of the polymer constituting the conjugated fiber, which has a melting point higher than another polymer constituting the conjugated fiber (or highest among other polymers constituting the conjugated fiber), the water-soluble thermoplastic resin is easily thermally decomposed. In this case, stable spinning is difficult. Furthermore, when the shear rate is excessively low, the fiber is easy to be broken. When the shear rate is excessively high, the back pressure of the nozzle increases and the spinnability is deteriorated. Furthermore, in the case where the draft is excessively low, it is difficult to spin the fiber stably because of increase of uneven fiber diameter. When the draft is excessively high, the fiber is easy to be broken.

In drawing a discharged thread and making the thread thin by using an aspirator such as an air jet nozzle in the present invention, it is preferred to make the thread thin by drawing the thread at a rate corresponding to a thread-drawing rate of about 500 to 6000 m/min. (preferably about 1000 to 5000 m/min.) by a high-speed air flow. The drawing condition of the thread by the evacuating unit is suitably selected depending on a melt viscosity of a molten polymer discharged from a spinning nozzle orifice, a discharge rate, a spinning nozzle temperature, a cooling condition, and others. An excessively slow drawing rate sometimes induces fusion of adjacent fibers before beginning the cooling and solidification of the discharged thread. Further, in this case, the orientation and crystallization of the thread does not proceed, the obtained nonwoven fabric composed of such a conjugate fiber is rough and has a low mechanical strength. Therefore, an excessively slow drawing rate is not preferred. On the other hand, an excessively high drawing rate fails to make the discharged thread thin, thereby breaking the obtained thread. This prevents a stable production of a nonwoven fabric comprising the conjugate continuous fiber.

Further, in order to produce the nonwoven fabric comprising the conjugate continuous fiber stably, it is preferred that the distance between the spinning nozzle orifice and the aspirator (such as an air jet nozzle) is about 30 to 200 cm (in particular about 40 to 150 cm). Such a distance depends on the kind of polymers to be used, the formulation, and the above-mentioned spinning condition. In the case where the distance is excessively short, fusion of the adjacent fibers sometimes occurs before beginning cooling and solidification of the discharged thread. Further, since the orientation and crystallization of the thread does not proceed, the obtained nonwoven fabric comprising the conjugate fiber has roughness and a low mechanical strength. On the other hand, when the distance is excessively long, the cooling and solidification of the thread immediately end before making the discharged thread thin with drawing. As a result, the fiber is broken, and a nonwoven fabric comprising a conjugate continuous fiber cannot be stably produced.

The conjugate continuous fiber thinned by using the aspirator such as an air jet nozzle is almost uniformly dispersed and collected on the surface of a collecting sheet so that a web is formed. It is preferred that the distance between the evacuating unit and the collecting surface be about 30 to 200 cm (particularly about 40 to 150 cm) in terms of productivity and a physical property of fiber in the obtained nonwoven fabric. Moreover, the fabric weight of the web is preferably in the range of about 5 to 500 g/m$^2$ (preferably about 10 to 400 g/m$^2$, and more preferably about 50 to 300 g/m$^2$) since a nonwoven fabric having such a fabric weight is suitable for production and has afterprocessability. Further, the yarn fineness of the conjugate continuous fiber evacuated and thinned for forming the web is preferably about 0.2 to 8 dtex (preferably about 0.5 to 7 dtex, and more preferably about 1 to 6 dtex) since a nonwoven fabric having a conjugate continuous fiber having such a yarn fineness is suitable for production to the extent of productivity.

In the present invention, by extractive removal of the water-soluble thermoplastic resin from a nonwoven fabric comprising a conjugate continuous fiber with a hydrophilic solvent, an ultra-fine continuous fiber can be made from the water-insoluble thermoplastic resin. The hydrophilic solvent includes water, in addition an alcohol (e.g., methanol, ethanol, isopropanol and butanol), a ketone (e.g., acetone), an ether (e.g., dioxane and tetrahydrofuran), a cellosolve (e.g., methyl cellosolve, ethyl cellosolve and butyl cellosolve), a carbitol (carbitol, diethylene glycol dimethyl ether and diethylene glycol methyl ethyl ether), and others. These hydrophilic solvents may be used singly or in combination. Among these hydrophilic solvents, the preferred solvent includes water, a $C_{1-3}$ alcohol such as ethanol, a ketone such as acetone, a mixed solvent of water and other hydrophilic solvent (s), and others. The solvent usually employed is water.

The method for extracting the water-soluble thermoplastic resin from the nonwoven fabric comprising a conjugate continuous fiber with the hydrophilic solvent is not particularly limited to a specific one, and may be selected from conventional methods, e.g., a method using a batch-type dyeing machine (such as circular, beam, jigger and winch) or a continuous hot water-treatment apparatus (such as a dip-nip, a vibrowasher, or a relaxer), and a method comprising jetting a pressurized water. Among them, the preferred one includes the method using a successive hot water-treatment apparatus because of its productivity or the stability of the nonwoven fabric obtained by the method. In the case of using water as the hydrophilic solvent, the extractant may be a neutral solution, or may be an alkali solution, an acidic solution.

In the present invention, at the extractive removal of the water-soluble thermoplastic resin with the continuous hot water-treatment apparatus, in order to keep the product passing through the step(s) smoothly or to maintain the form stability of the product (that is, in order to keep the form or state of the bundle of the ultra-fine fiber), it is preferred that the nonwoven fabric comprising the conjugate continuous fiber be treated, with being put between a first water permeable sheet disposed on a first surface of the nonwoven fabric and a second water permeable sheet disposed on a second surface of the nonwoven fabric (with being held between the first and second water-permeable sheets). In the case of using the water-permeable sheets in the treatment, the treatment may be conducted by a circulating manner in which the sheets are disposed in an extraction apparatus for putting a nonwoven fabric between the sheets and removing the nonwoven fabric therefrom continuously, or may be conducted by a manner using an unwinder for putting a nonwoven surface between sheets and a winder for removing the nonwoven fabric therefrom.

Moreover, it is desirable that an appropriate distribution of the bundle of the fiber that the water-soluble thermoplastic resin is extractively removed from the nonwoven fabric comprising the conjugate continuous fiber with being put between the first and second water-permeable sheets. That is, if the water-soluble thermoplastic resin is removed from the nonwoven fabric comprising the conjugate continuous fiber, which has been subjected to a treatment (such as needle-punching, hydroentangling, or embossing at a temperature of not higher than 100°C), without using the water-permeable sheets or with using one water-permeable sheet which is put on only one side of the nonwoven fabric, most of the bundles of the fiber in the nonwoven fabric comprising the conjugate continuous fiber becomes disrupted or unraveled. This prevents an appropriate distribution of the bundle of the fiber in the nonwoven fabric. On the other hand, if the water-permeable sheets are on the both surfaces of a conjugate spunbonded nonwoven fabric, an appropriate restriction of the move of the nonwoven fabric by the water-permeable sheets suppresses an excessive progress of disruption of the bundle of the fiber, which enables a desirable distribution of the bundle of the fiber. Therefore, it is possible to form voids in the filter material advantageously and to maintain liquid permeability.

The kind of the water-permeable sheet is not particularly limited to a specific one. It is necessary that the water-permeable sheet allow the hydrophilic solvent (particularly water) to pass through the water-permeable sheet efficiently. Moreover, it is necessary that the water-permeable sheet be separable from the nonwoven fabric comprising the ultra-fine continuous fiber easily after the extractive removal of the water-soluble thermoplastic resin. For that reason, the preferred water-permeable sheet includes a versatile nonwoven fabric or cloth, a mesh sheet, a wire mesh, or the like. The preferred material of the water-permeable sheet includes a hydrophilic material. The reason for that is that the water-permeable sheet formed of the hydrophilic material allows the hydrophilic solvent to permeate sufficiently through the nonwoven fabric comprising the conjugate continuous fiber between the water-permeable sheets, so that the extraction efficiency and the distribution of the bundle of the fiber can be improved. Incidentally, it is preferred that both of the surfaces of the nonwoven fabric comprising the continuous fiber be kept covering with the water-permeable sheets from the beginning to the end of the extractive removal of the water-soluble thermoplastic resin. It is also preferred that the water-permeable sheets move or travel at a speed which is the same as the nonwoven fabric comprising the continuous fiber while the nonwoven fabric of the continuous fiber moves or travels.

In the present invention, the extractive removal of the water-soluble thermoplastic resin with the hydrophilic solvent is conducted so as to allow part of the water-soluble thermoplastic resin to remain in the nonwoven fabric. In this manner, the nonwoven fabric suitable for the filter material capable of removing a slight amount of water is obtained. Such a nonwoven fabric has an appropriate distribution of the bundle of the fiber and a small amount of the remaining water-soluble thermoplastic resin. In order to impart the above-mentioned properties to the nonwoven fabric by controlling the distribution of the bundle of the fiber and the amount of the remaining water-soluble thermoplastic resin, it is preferred that the removal condition(s) be predetermined by the examination of the various modifications of the condition(s) (e.g., the amount of the hydrophilic solvent to be used for the removing treatment, the treating manner, the treating time, and the treating temperature) prior to the removal treatment.

Specifically, in the extractive removal of the water-soluble thermoplastic resin, the proportion of the hydrophilic solvent is not less than 100 times (based on mass) (e.g. , about 100 to 2000 times), preferably not less than 200 times (based on mass) (e.g., about 200 to 1000 times), relative to the nonwoven fabric comprising the conjugate continuous fiber. An excessively small amount of the hydrophilic solvent dissolves and removes the water-soluble thermoplastic resin insufficiently, whereby the objective nonwoven fabric comprising the ultra-fine continuous fiber cannot be often obtained. Incidentally, in the case of an insufficient extractive removal of the water-soluble thermoplastic resin, another extractive removal of the water-soluble thermoplastic resin from the nonwoven fabric may be conducted in a bath containing a new or fresh hydrophilic solvent, which is free from the water-soluble thermoplastic resin.

The extractive treatment temperature may be suitably adjusted depending on the purpose and the kind of the solvent. For example, in the case of extracting with a warm water (or a hot water) or a boiling water, the treatment is conducted preferably at about 40 to 120°C, preferably at about 60 to 110°C, and more preferably at about 80 to 100°C. At an excessively low treatment temperature, the water-soluble thermoplastic resin is insufficiently extracted, whereby the production of the nonwoven fabric is decreased. Moreover, at an excessively high treatment temperature, the water-soluble thermoplastic resin is dissolved extremely fast, thereby making the stable production of the nonwoven fabric having a required proportion of the water-soluble thermoplastic resin sometimes difficult. In the case where once the water-soluble thermoplastic resin is extractivly removed from the nonwoven fabric completely, it is difficult to impart a hydrophilicity which is highly durable as defined in the present invention to the resulting nonwoven fabric, even though with the addition of the water-soluble thermoplastic resin to the resulting nonwoven fabric using a manner of applying a solution containing the water- soluble thermoplastic resin to the resulting nonwoven fabric, or other means.

The extractive treatment time may also be suitably adjusted depending on the object, apparatus to be used, and treatment temperature. For better production efficiency and stability, and quality and performance of the obtained nonwoven fabric comprising the ultra-fine continuous fiber, the treatment time in a batch treatment is preferably about 10 to 200 minutes (particularly about 10 to 150 minutes) in total. In the case of a continuous treatment the treatment time is preferably about 0.5 to 50 minutes (particularly about 1 to 20 minutes).

Moreover, in order to obtain a filter material having a higher collecting efficiency, i.e., a nonwoven fabric having a uniform distribution of the bundle of the fiber and a uniform pore diameter, it is preferred that the nonwoven fabric be shrinked or contracted by the extraction. The preferred shrinkage by area of the nonwoven fabric is, for example, about 1 to 50% (particularly about 5 to 40%). An excessively small shrinkage by area improves the performances of the nonwoven fabric a little. On the other hand, a stable production of a nonwoven fabric having an excessively large shrinkage by area is difficult.

Such a preferred shrinkage is advantageously produced by dissolving or eluting the water-soluble thermoplastic resin with the hydrophilic solvent in the presence of a chemical agent. The manner of the addition of the chemical agent is not particularly limited to a specific one. The chemical agent may be added to the hydrophilic solvent, or a predetermined amount of the chemical agent may directly be applied to the nonwoven fabric comprising the conjugate continuous fiber. Moreover, it is preferred that the amount of the chemical agent be predetermined by the examination of the various modification of the addition of the chemical agent in order to obtain the shrinkage by area defined in the present invention. In the case of the addition of the chemical agent to the hydrophilic solvent, the concentration of the chemical agent is not particularly limited to a specific one. The concentration of the chemical is, for example, about 0.01 to 1% by mass and preferably about 0.1 to 0.5% by mass. Furthermore, in the case of the direct application of the chemical agent to the nonwoven fabric, the concentration may be adjusted to the range mentioned above.

The chemical agent is not particularly limited to a specific one as long as the chemical agent effectively causes the shrinkage. The preferred chemical agent includes a surfactant, which can readily be removed from the nonwoven fabric in the washing step after the elution.

The examples of the surfactant include an anionic surfactant (e.g., a salt of a fatty acid, an alkylsulfuric ester, a salt of an alkylbenzenesulfonic acid, a salt of an alkylnaphthalenesulfonate, a salt of alkylsulfosuccinic acid, and a polyoxyethylene alkylsulfuric ester), a nonionic surfactant (e.g., a polyoxyalkylene alkyl ether such as a polyoxyethylene alkyl ether, a polyoxyethylene derivative, a sorbitan fatty acid ester, a polyoxyethylene sorbitan fatty acid ester, a polyoxyethylene sorbitol fatty acid ester, a glycerine fatty acid ester, a polyoxyethylene alkylamine, and an alkylalkanolamide), a cationic and amphoteric ionic surfactant (e.g., a salt of an alkylamine, a salt of quaternary amine, an alkyl betaine, and an amine oxide). These surfactants may be used singly or in combination. In the present invention, among the surfactants, the nonionic surfactant is preferred since the nonionic surfactant allows the thermoplastic water-soluble resin to remain on the surface of the thermoplastic water-insoluble resin appropriately and the obtained ultra-fine fiber to disperse appropriately.

The extractive treatment (in particular an extractive treatment with water) is advantageously conducted by the following manner in order to allow a small amount of the water-soluble thermoplastic resin to remain on the water-insoluble thermoplastic resin and to improve the dispersibility of the bundle of the ultra-fine fiber at the forming the conjugate continuous fiber into the ultra-fine continuous fiber due to the filamentary separability: starting the extractive treatment at a temperature from not higher than 70°C (e.g., about 10 to 65°C); increasing the water temperature gradually up to a given temperature (e.g., up to the range of about 80 to 120°C, preferably up to the range of about 80 to 110°C);

and the extractive treatment is carried out in the temperature range for about 1 minute to 2 hours (particularly for about 2 minutes to 1 hour). The rate of increase of temperature onheating is preferably about 0. 5 to 20°C/minute (particularly about 1 to 15°C/minute). Incidentally, the manner of increasing the temperature may be a step wise manner (in which the temperature of the same bath is continuously increased) or a batch manner (in which the nonwoven fabric is immersed in the baths which had been prepared so that the baths have temperatures in a gradually ascending order). With the gradual increase in temperature under such a condition, the water-soluble thermoplastic resin component is constricted on dissolution. As a result, the bundle of the ultra-fine continuous fiber comprising the water-insoluble thermoplastic resin as a residual component is sufficiently dispersed, which improves the collection efficiency of the obtained filter material. The preferred percentage of contraction in the longitudinal direction and the width direction is about 0.5 to 30% (particularly about 2.5 to 20%).

Other than such a method, various methods are applicable to the method for improving dispersibility of the conjugate continuous fiber. The various methods include, e.g., a separating method by jetting a pressurized water, a separating method by allowing the nonwoven fabric to pass through a running water bath, and a separating method by allowing the nonwoven fabric to pass through between pressure rolls. Such a method may be carried out in combination with a method for extractive removing the water-soluble thermoplastic resin.

The drying temperature after extractive treating the water-soluble thermoplastic resin is, for example, not higher than 120°C (e.g., about 30 to 120°C), preferably not higher than 115°C (e.g., about 40 to 115°C), and more preferably not higher than 110°C (e.g., about 50 to 100°C). An excessively high drying temperature prompts the progress of crystallization of the residual water-soluble thermoplastic resin (particularly the water-soluble thermoplastic PVA), whereby the hydrophilic performance of the nonwoven fabric is decreased. Incidentally, the drying step may be carried out at a room temperature.

The drying time may also be adjusted suitably in accordance with the object, apparatus to be used, and drying temperature. For better production efficiency,stability, and quality and performance of the obtained nonwoven fabric comprising the ultra-fine continuous fiber, the drying time is within 24 hours (e.g., about one minute to 24 hours) in the case of conducting a batch treatment, and within one hour (e.g., about one minute to one hour) in the case of a continuous treatment.

Among the water-soluble thermoplastic resins used in the present invention, for example, the water-soluble thermoplastic PVA is biodegradable and is decomposed into water and carbon dioxide by treating with activated sludge or burying in soil. For treating the waste fluid (discharged water) after dissolving the PVA, the activated sludge process is preferred. In the case of continuous treating the aqueous solution containing a PVA with an activated sluge, the PVA is decomposed in two days to one month. Moreover, since the PVA used in the present invention has low combustion heat and small load to an incinerator, the PVA may be incinerated after drying the waste fluid.

In the present invention, in order to maintain the form as a filter material, a various adhesive bonding and entangling manners or means can be applied to the nonwoven fabric comprising the ultra-fine continuous fiber (or the nonwoven fabric web comprising the ultra-fine continuous fiber). Examples of such a manner may include thermal emboss-calender method, water-jetting, needle-punching, ultrasonic sealing, through-air method, stitch bonding, emulsion bonding, a method comprising scattering a powdered adhesive on a nonwoven fabric, or the like. Among the methods, the preferred method includes needle-punching, water-jetting, embossing, or calendering since these methods are suitable for producing a nonwoven fabric having a good appearance and quality. The particularly preferred method includes needle-punching or water-jetting since the method is suitable for producing a controlled dispersion of the bundle of the fiber. The timing of the sheet forming from the nonwoven fabric is not particularly limited to aspecificone. The sheet forming therefrommay be conducted at any time during the treatment, according to need. For example, the sheet formation may be conducted before or after the extraction of the water-soluble thermoplastic resin with the hydrophilic solvent.

In the case of needle-punching, a condition (such as the kind of oil agent, the kind of needle shape, the length of needle penetration depth, or the number of punches) is suitably selected from the conventional conditions. In short, the more barbs a needle has, the more effectively the nonwoven fabric is needle-punched. However, the preferred number of barbs is about 1 to 9 (particularly about 2 to 8) since a needle having a number of barbs in the range mentioned above is difficult to break. The needle penetration depth preferably allows the needle to penetrate the nonwoven fabric and to leave a slight trace of the needle in or on the nonwoven fabric surface. The number of punches is, depending on the kinds of selected needle, oil agent, or the like, about 50 to 5000 punches/cm$^2$ (particularly about 100 to 4000 punches/cm$^2$), which produces a uniform or soft (flexible) nonwoven fabric.

In water-jetting (hydroentangling), for example, the nonwoven fabric may be treated with a water-jetting (hydroentangling) machine at a water pressure of about 1 to 300 kgf/cm$^2$ (particular about 5 to 200 kgf/cm$^2$) once or more than once in order to disperse the fibers and to entangle the fibers with each other. The water jetting machine may have a nozzle plate having 1 to 3 lines of nozzles having a nozzle diameter of about 0.02 to 0.4 mm (particularly about 0.05 to 0.2 mm) and a pitch of about 0.1 to 5 mm (particularly about 0.5 to 2 mm).

In the present invention, the needle-punching or water-jetting is particularly preferred. Prior to the treatments mentioned above, other bonding methods may be used as a preliminary bonding of the fibers of the nonwoven fabric (e.g., a thermal emboss-calender method at a relatively low temperature of about 40 to 80°C) in order to bond the fibers thereof to each other moderately.

Further, the nonwoven fabric comprising the ultra-fine continuous fiber may be subjected to an afterprocessing treatment, depending on the purpose, such as an electrizing treatment by electret processing, and a hydrophilic treatment by a plasma discharge treatment or a corona discharge treatment.

Moreover, the nonwoven fabric comprising the ultra-fine continuous fiber obtained in the present invention may be not only used alone but also used as a laminate by laminating on other nonwoven fabric [e.g., a nonwoven fabric comprising a continuous fiber, and a nonwoven fabric comprising a shortcut (or staple) fiber], a textile fabric [e.g., a woven fabric (or weaving) and a knitted fabric (or knitting)], and others. As usage, practical functions may be imparted to the nonwoven fabric by laminating on a nonwoven fabric or woven (or textile) fabric. For example, lamination of a spunbonded nonwoven fabric which comprises a fiber having a conventional fiber diameter on one side of the nonwoven fabric obtained in the present invention improves the form stability of the nonwoven fabric.

The fabric weight of the nonwoven fabric is, for example, about 5 to 500 $g/m^2$ and preferably about 10 to 400 $g/m^2$. A nonwoven fabric having a fabric weight in the range mentioned above is suitable for producing and processing. In particular, the nonwoven fabric to be used as a fuel filter preferably has a fabric weight of about 30 to 300 $g/m^2$

For an efficient filtration, the air permeability is, for example, not more than 20 $ml/cm^2$·second (e. g. , about 0.1 to 20 $ml/cm^2$·second), preferably about 0.2 to 10 $ml/cm^2$·second, and more preferably about 0.3 to 8 $ml/cm^2$·second (particularly about 0.5 to 5 $ml/cm^2$·second).

INDUSTRIAL APPLICABILITY

The nonwoven fabric comprising the ultra-fine continuous fiber obtained by a manner mentioned above has a large surface area and excellent collection efficiency for a minute dust (an excellent particle collection efficiency). The nonwoven fabric comprising the ultra-fine continuous fiber mentioned above can be used as various filters (e.g., a liquid filter used in the field of pharmaceutical industry, electronics industry, food engineering, automobile industry, or the like and a gas filter used in the field of home appliance industry, a gas filter for a cabin (such as a vehicle or automobile cabin) engineering, and a gas filter for mask).

In particular, the filter material of the present invention has a high dust collection efficiency for a slight amount of water owing to the water-soluble thermoplastic resin remaining in the nonwoven fabric and both of a high liquid permeability and durability owing to voids or gap formed between the bundle of the fiber distributed appropriately in the nonwoven fabric. Therefore, the filter material of the present invention is suitable for a liquid fuel filter requiring a longer life and filter properties or efficiencies. The liquid fuel filter formed from the filter material of the present invention can be used for various applications (such as automobile industry or electronics industry). Such a liquid fuel filter can be used as a liquid fuel filter such as a gasoline (petrol) filter, a diesel engine fuel filter, or a filter for various oils, in automobile industry particularly.

In particular, since gas emissions from diesel-powered automobiles and the like has become a serious social problem, the demand for diesel engine fuel (light oil) free from impurities has been increased. The filter material of the present invention is particularly suitable for the filter to meet the demand. For example, the filter material of the present invention has a collection efficiency of, for example, not less than 90% (particularly not less than 95%) with respect to a JIS 8 type dust having not less than 10 $\mu$m, which exists in a proportion of 0.02% by mass in a light oil.

EXAMPLES

The following examples are intended to describe this invention in further detail and should by no means be interpreted as defining the scope of the invention. Incidentally, in Examples, each of physical properties was determined as follows. The terms "part(s)" and "%" in Examples indicate the proportion by mass unless otherwise stated.

[Analysis method of PVA]

The analysis method of the PVA was conducted in accordance with JIS-K6726 except as otherwise noted. The modified amount was determined based on measurement of a modified polyvinyl ester or modified PVA by a 500 MHz $^1$H-NMR apparatus (manufactured by JEOL, "GX-500"). The content of the alkali metal ion was determined by an atomic absorption method.

[Melting point]

The melting point of the PVA was measured using a DSC (manufactured by Mettler-Toledo K.K., "TA3000") as follows. The PVA was heated to 250°C at a heating rate of 10°C/min. under nitrogen atmosphere and then cooled to a room temperature, and again heated to 250°C at a heating rate of 10°C /min. The temperature of top of the endoergic peak was determined as a melting point of the PVA.

[Spinning state]

The state of the melt spinning was observed visually and evaluated on the basis of the following criteria.
"A": extremely good
"B": good
"C": slightly bad
"D": bad

[State of nonwoven fabric]

The obtained nonwoven fabric was observed visually and by touching the nonwoven fabric by hand and evaluated on the basis of the following criteria.
"A": uniform and extremely good
"B": almost uniform and good
"C": slightly bad
"D": bad

[Proportion of water-soluble thermoplastic PVA relative to nonwoven fabric]

A nonwoven fabric sample of 30 centimeters square was immersed in 2000 ml of a water in an autoclave and heat-treated at 120°C for one hour. After the treatment, the nonwoven fabric was removed from the hot water and wrung lightly. The solution obtained by the above extracting was exchanged with fresh water, and the same operation mentioned above was conducted. The treatment was repeated three times in total to remove the water-soluble thermoplastic PVA in the nonwoven fabric enough by extraction. Based on the weight change before and after the treatment, the proportion of the water-soluble thermoplastic PVA relative to the nonwoven fabric was determined.

[Mean fiber diameter]

In a courtesy photograph of the cross section of a nonwoven fabric sample, which was taken by a microscope of 1000 magnifications, 20 pieces of fiber were sampled at random. Each fiber diameter of these fibers was measured, and the average value was considered as the mean fiber diameter.

[Width of bundle of fiber and occupancy area of bundle of fiber]

A courtesy photograph of the nonwoven fabric sample taken by a microscope of 100 magnifications was further magnified 10 times. The width of the bundle of the fiber in which the fibers are aggregated in the form of a bundle and the number of the fibers in the bundle were measured. The occupancy ratio of the bundle of the fiber having a width of 3 to 100 $\mu$m relative to the surface area of the nonwoven fabric was calculated.

[Fabric weight and Tensile strength]

he fabric weight and tensile strength were measured in accordance with JIS L1906 "Test methods for nonwoven fabrics made of filament yarn".

[Air permeability]

The air permeability was measured with Frazier method in accordance with JIS L1906 "Test methods for nonwoven fabrics made of filament yarn".

[Mean pore diameter]

The mean pore diameter was measured using a porometer (manufactured by Colter Electronics, "colter POROMETER II").

[Filtration efficiency]

A JIS 8 type dust was mixed with a light oil in a proportion of 0.02%, and the dust was dispersed uniformly enough in the light oil using an ultrasonic agitator. The mixture was allowed to pass through a nonwoven fabric with a pressure of 0.05 MPa. Based on the measured particle diameter distributions of the mixture before and after passing through the nonwoven fabric, the filtration efficiency with respect to a particle having a particle diameter of not less than 10 $\mu$m was calculated.

[Removal ratio of slight amount of water in fuel]

A light oil was allowed to pass through a nonwoven fabric with a pressure of 0.05 MPa. The water contents of the light oil before and after passing through the nonwoven fabric were measured. Based on the both measured water contents, the removal rate of a slight amount of water was calculated.

Synthesis Example 1 (ethylene-modified PVA pellet: PVA-1)

To a 50 L vessel for pressure reaction, equipped with a stirrer, a nitrogen-introducing port, an ethylene-introducing port, and an initiator-adding port, 15.0 kg of vinyl acetate and 16.0 kg of methanol were fed. The mixture was heated to 60°C, and then the atmosphere of the reaction system was replaced with nitrogen gas by bubbling for 30 minutes. Then, ethylene was fed into the reaction vessel in order to adjust the pressure of the reaction vessel to 5.5 kgf/cm$^2$ (5.4 x 10$^5$ Pa). 2,2'-Azobis(4-methoxy-2,4-dimethylvaleronitrile)) (AMV) was dissolved as an initiator in methanol to prepare an initiator solution having a concentration of 2.8 g/L, and the atmosphere of the system was replaced with nitrogen gas by bubbling. The inner temperature of the reaction vessel was adjusted to 60°C, and then 170 ml of the initiator solution was poured into the reaction vessel to start the polymerization reaction. During the polymerization, AMV was continuously added to the vessel at a rate of 300 ml/hr using the initiator solution and the pressure of the vessel was maintained at 5.6 kgf/cm$^2$ (5.5 x 10$^5$ Pa) by introducing ethylene thereinto and the temperature of polymerization was maintained at 60°C. When the conversioon of monomer to polymer became 68% after 9 hours, the polymerization reaction was stopped by cooling the system. The reaction system was opened to remove or release ethylene therefrom, and then the removal of ethylene was completely conducted by bubbling with nitrogen gas. Thereafter, a remaining unreacted vinyl acetate monomer in the reaction mixture was evaporated under a reduced pressure, and a polyvinyl acetate was obtained as a methanol solution thereof.
Methanol was added to the obtained polyvinyl acetate solution to adjust the polyvinyl acetate concentration to 50%. To 2.0 kg of the resultant methanol solution of the polyvinyl acetate (polyvinyl acetate in the solution: 1.0 kg) was added 0.48 kg of an alkali solution (a methanol solution containing 10% NaOH) for saponification. That is , the molar ratio (MR) of NaOH relative to vinyl acetate unit in polyvinyl acetate was 0.10. After about 5 minutes from the alkali addition, a resultant gelated product was pulverized by a pulverizer, and the pulverized product was allowed to stand at 60°C for 3 hours to allow the saponification reaction to progress further. Thereafter, 10 kg of a mixed solution of a 0.5% acetic acid aqueous solution and methanol (acetic acid aqueous solution/methanol = 20/80 (mass ratio)) was added to the saponified product to neutralize the remaining alkali. The completion of the neutralization was confirmed using a phenolphthalein indicator, and then the reaction product was filtrated to give a white solid PVA. The PVA was added to 20.0 kg of a mixed solution of water and methanol [water/methanol = 20/80 (mass ratio)], and the mixture was allowed to stand at a room temperature for three hours for washing. The washing operation was repeated three times. Then, 10.0 kg of methanol was further added to the washed matter, and the mixture was allowed to stand at a room temperature for three hours for washing. Thereafter, the resultant was centrifuged for removing liquid, and thus obtained PVA was allowed to stand at 70°C for two days in a drying machine to give a dried PVA (PVA-1).
The saponification degree of the obtained ethylene-modified PVA was 98.9 mol%. Moreover, the modified PVA was ashed, and the resulting matter was dissolved in an acid. The sodium content of the resulting matter measured by an atomic absorption photometer was 0.0008 part by mass relative to 100 parts by mass of the modified PVA.
Moreover, to n-hexane was added the methanol solution of the polyvinyl acetate obtained by removing the unreacted vinyl acetate monomer after the polymerization, to precipitate the polyvinyl acetate. The precipitate was dissolved in acetone to be purified. The reprecipitation for purification was conducted three times, and then the resulting matter was dried under a reduced pressure at 80°C for three days to give a purified polyvinyl acetate. The purified polyvinyl acetate was dissolved in DMSO-d6, and H-NMR thereof was measured using a 500 MHz proton NMR (manufactured by JEOL, "GX-500") at 80°C to determine the ethylene content of the polyvinyl acetate. The ethylene content of the polyvinyl acetate was 8.5 mol%.
The methanol solution of the polyvinyl acetate mentioned above was saponified in an alkali molar ratio of 0.5, and the resulting matter was pulverized. The pulverized matter was allowed to stand at 60°C for five hours to allow the saponification reaction to progress further. Thereafter, the resulting matter was subjected to a methanol Soxhlet for three days, and dried under a reduced pressure at 80°C for three days to give a purified ethylene-modified PVA. The average degree of polymerization of the PVA was measured in accordance with a conventional method, JIS K6726. The average degree of polymerization of the PVA was 350. Further, a 5% aqueous solution of the purified modified PVA was prepared, and a cast film having a thickness of 10 $\mu$m was produced. The film was dried under a reduced pressure at 80°C for one day, and then the melting point of the PVA was measured according to the above-mentioned method by using a DSC (Mettler-Toledo K. K. , "TA3000"). The melting point of the PVA was 211°C. The results are shown in Table 1.

The obtained PVA was molten and extruded at a preset temperature of 220°C and a screw rotation speed of 200 rpm by means of a biaxial extruder (manufactured by The Japan Steel Works, Ltd., 30 mm$\phi$) to make pellets.

Synthesis Examples 2 and 3 (ethylene-modified PVA pellets: PVA-2 and PVA-3)

A PVA having physical properties shown in Table 1 was produced by a method according to Synthesis Example 1. To 100 parts of the obtained PVA was added 5 parts of a plasticizer (a compound obtained by adding 2 mol of ethylene oxide to 1 mol of sorbitol on average). Using a biaxial extruder (manufactured by The Japan Steel Works, Ltd., 30 mm$\phi$), the resulting mixture was melted and extruded at a preset temperature of 240°C and a screw rotation speed of 200 rpm to produce pellets of PVA-2. On the other hand, to 100 parts of the obtained PVA was added 10 parts of the plasticizer. The resulting mixture of PVA was also melted and extruded with a biaxial extruder same as that mentioned above at a preset temperature of 200°C and a screw rotation speed of 200 rpm to produce pellets of PVA-3.

Synthesis Example 4 (ethylene-modified PVA pellet: PVA-4)

A PVA having physical properties shown in Table 1 was produced by a method according to Synthesis Example 1. Using a biaxial extruder (manufactured by The Japan Steel Works, Ltd., 30 mm$\phi$), the PVA was melted and extruded at a preset temperature of 210°C and a screw rotation speed of 200 rpm to produce pellets.

[Table 1]

Table 1

| | Polymerization degree | Saponification degree (mol%) | Unit for modification | Amount of unit for modification (mol%) | Sodium ion (Parts) | Melting point (°C) | Temperature (°C) | Plasticizer (parts) |
|---|---|---|---|---|---|---|---|---|
| | PVA | | | | | | Pelletization | |
| PVA-1 | 350 | 98.9 | ethylene | 8.5 | 0.0008 | 211 | 230 | - |
| PVA-2 | 210 | 99.6 | none | - | 0.02 | 228 | 240 | 5 |
| PVA-3 | 850 | 88.5 | ethylene | 5.5 | 0.00006 | 181 | 200 | 10 |
| PVA-4 | 340 | 97.0 | ethylene | 16.0 | 0.007 | 188 | 210 | - |

Example 1

The PVA (PVA-1) pellets obtained in Synthesis Example 1 and a polyethylene terephthalate modified with isophthalic acid(i-PET, the proportion of isophthalic acid in the polymer: 6 mol%) having an intrinsic viscosity of 0.7 and a melting point of 240°C were prepared. The PVA and the modified polyethylene terephthalate were independently heated by a extruder for melt-kneading, and guided to an islands-in-the-sea-shaped form (with 300 islands) conjugate spinning head at 280°C to adjust the mass ratio of i-PET relative to PVA in a conjugate continuous fiber constituting a nonwoven fabric [PET/PVA] to 70/30. Then, the guided matter was discharged from a spinneret under the following conditions: a nozzle diameter of 0.35 mm$\phi$ x 1008 holes, a discharge rate of 710 g/min. and a shear rate of 2500 sec$^{-1}$. The group of spun filaments was drawn and made thin at a drawing rate of 3000 m/min. with an ejector under cooling with cold wind of 20°C, wherein the ejector discharged a high-speed air and was located at a distance of 80 cm from the nozzle. Then, the group of the opened filaments was collected and deposited on a collecting conveyer apparatus rotating endlessly to form a web composed of the continuous fiber. Regarding the spinning state, there was no break of the fiber and the shape of the cross section was highly excellent.

Fig. 1 represents a sectional view of the obtained conjugate continuous fiber (the sectional view in the direction perpendicular to the longitudinal direction). The cross sectional form (or structure) of the fiber is an islands-in-the-sea-shaped form (with 300 islands) comprising a sea phase 1 comprising the water-soluble thermoplastic PVA and an island phase 2 comprising the thermoplastic polymer modified with isophthalic acid.

Thereafter, the web was allowed to pass through between an uneven-patterned embossed roll and a flat roll heated at 60°C under a linear load of 50 kgf/cm (490 N/cm), and the embossed regions were thermocompressed to maintain the form of the web. The web was then subjected to a needle-punching (the number of barb was 1 and the number of punches was 240 per cm$^2$) to produce a nonwoven fabric which comprises an islands-in-the-sea-shaped form (with 300 islands) conjugate continuous fiber having a fabric weight of 114 g/m$^2$ and a single fiber fineness of 2.3 dtex. The obtained nonwoven fabric was uniform and highly excellent. The production conditions of the nonwoven fabric comprising the conjugate continuous fiber were shown in Table 2.

About 50 m of the obtained nonwoven fabric comprising the conjugate continuous fiber was subjected to an extraction treatment of PVA component using a successive multiple-step washing bath system (a dip-nip method using 400 L of water per bath). The washing bath system comprised 6 baths (first to sixth baths). The temperatures of the first to six baths were 60°C, 70°C, 80°C, 90°C, 95°C, and 95°C, respectively. The treatment was conducted in the baths from the first to the sixth. Moreover, to the water of each of the first and second baths was addedanonionic surfactant ("Unisalt 1221" manufactured by Meisei chemical Ltd.) to adjust the concentration of the surfactant of 3 g/L. Further, in the extraction treatment, a mesh made of a polyamide (a PA mesh having 200 meshes) was used as water-permeable sheets. The nonwoven fabric comprising the conjugate continuous fiber was held with the meshes, contacting with first and second surfaces (contacting with the top surface or the down surface) of the nonwoven fabric. With being sandwiched with the meshes, the nonwoven fabric was allowed to pass through the washing bath system successively at a nip pressure of 0.1 MPa and a speed rate of 1 m/minute (the residence time in each bath was 1 minute). The nonwoven fabric comprising the continuous fiber was then subjected to a hot-air drying at 110°C for three minutes, and the dried nonwoven fabric was removed from the meshes made of polyamide. In this manner, a filter material comprising the nonwoven fabric which comprises an ultra-fine continuous fiber comprising the polyethylene terephthalate modified with isophthalic acid was obtained. The proportion of the PVA in the nonwoven fabric after the extraction was 0.05%.

In the obtained filter material, the dispersibility of the ultra-fine continuous fiber constituting the filter material was uniform. In addition, in the surface of the filter material, the occupancy ratio of the bundle of the fiber having a width of 3 to 100 $\mu$m was 8%. The evaluation results of each of physical properties of the nonwoven fabric are shown in Table 3.

Examples 2 to 7

Except for using the spinnerets and spinning conditions shown in Table 2 and adjusting the distance between a nozzle and an ejector and the line net traveling speed suitably, a nonwoven fabric comprising a conjugate continuous fiber was obtained from the water-insoluble polymers and the PVAs shown in Table 2 and under the same condition as in Example 1. The spinning state is shown in Table 2. As in Example 1, the obtained nonwoven fabric comprising the conjugate continuous fiber was subjected to an extraction of a PVA using a successive multi-step washing bath system and then a hot-air drying at 110°C for three minute. In this manner, an objective filter material comprising a nonwoven fabric comprising an ultra-fine continuous fiber was obtained. In the obtained filter materials, the ultra-fine continuous fiber constituted the nonwoven fabric with being dispersed sufficiently. The evaluation results of each of physical properties of the obtained filter materials are shown in Table 3.

Example 8

After a production of a conjugate continuous fiber under the same condition as in Example 1, a sheet was formed from the fiber by water-jetting, instead of needle-punching. Incidentally, in the water-jetting, a nozzle plate having nozzles having a nozzle diameter of 0.1 mm and arranged in three lines with a pitch between the nozzles of 0.6 mm was used, the water pressure of the nozzle in each line was 40 kgf/cm$^2$, 60 kgf/cm$^2$, and 80 kgf/cm$^2$, and the traveling speed of the nonwoven fabric was 5 m/minute. After the water-jetting mentioned above, a filter material comprising a nonwoven fabric comprising an ultra-fine continuous fiber was obtained from the sheet under the same condition as in Example 1. The evaluation results of each of physical properties of the obtained filter materials are shown in Table 3.

Example 9

A conjugate continuous fiber was produced and a sheet was formed from the conjugate continuous fiber by needle-punching under the same condition as in Example 1. The obtained sheet was then subjected to an extraction of a PVA as in Example 1 except for using a PET homoSB ("90153WSO" which is a nonwoven fabric made of a styrene-butadiene rubber containing polyethylene terephthalate, manufactured by Unitika Ltd. and has a fabric weight of 15 g/m$^2$) as water-permeable sheets. In this manner, a filter material comprising a nonwoven fabric comprising an ultra-fine continuous fiber was obtained. The evaluation results of each of physical properties of the obtained filter materials are shown in Table 3.

Example 10

A conjugate continuous fiber was produced and a sheet was formed from the conjugate continuous fiber by needle-punching under the same condition as in Example 1. The obtained sheet was then subjected to an extraction of a PVA as in Example 1 except for using a cotton fabric (manufactured Yamamichi Kikaku Co. , Ltd., "5088E (Siro)") as water-permeable sheets. In this manner, a filter material comprising a nonwoven fabric comprising an ultra-fine continuous fiber was obtained. The evaluation results of each of physical properties of the obtained filter materials are shown in Table 3.

Example 11

A conjugate continuous fiber was produced and a sheet was formed from the conjugate continuous fiber by needle-punching under the same condition as in Example 1. The obtained sheet was then subjected to an extraction of a PVA component with a successive multi-step washing bath system in which the preset temperatures of all baths were 95°C. In this manner, a filter material comprising a nonwoven fabric comprising an ultra-fine continuous fiber was obtained. The evaluation results of each of physical properties of the obtained filter material are shown in Table 3.

Example 12

A conjugate continuous fiber was produced and a sheet was formed from the conjugate continuous fiber by needle-punching under the same condition as in Example 1. The obtained sheet was then subjected to an extraction of a PVA as in Example 1 except for not adding a nonionic surfactant to water in first and second baths. In this manner, a filter material comprising a nonwoven fabric comprising an ultra-fine continuous fiber was obtained. The evaluation results of each of physical properties of the obtained filter material are shown in Table 3.

Example 13

A conjugate continuous fiber was produced and a sheet was formed from the conjugate continuous fiber by needle-punching under the same condition as in Example 1. The obtained sheet was then subjected to an extraction of a PVA as in Example 1 except for the residence time of 2 minutes in each bath of a successive multiple-step washing bath system. In this manner, a filter material comprising a nonwoven fabric comprising an ultra-fine continuous fiber was obtained. The evaluation results of each of physical properties of the obtained filter material are shown in Table 3.

Example 14

A conjugate continuous fiber was produced and a sheet was formed from the conjugate continuous fiber by needle-punching under the same condition as in Example 1. Except that the obtained sheet was laminated or put on a PET homoSB ("90153WSO" manufactured by Unitika Ltd., a nonwoven fabric made of a styrene-butadiene rubber

containing polyethylene terephthalate and has a fabric weight of 15 g/m$^2$) used as a water-permeable sheet and the obtained sheet on the water-permeable sheet was subjected to needle-punching as in Example 1. Then the obtained sheet being on the water-permeable sheet was subjected to an extraction of a PVA under the same condition as in Example 1. In this manner, a filter material comprising a nonwoven fabric comprising an ultra-fine continuous fiber was obtained. The evaluation results of each of physical properties of the obtained filter materials are shown in Table 3.

Example 15

A conjugate continuous fiber was produced and a sheet was formed from the conjugate continuous fiber by needle-punching under the same condition as in Example 1. The obtained sheet was then subjected to an extraction of a PVA as in Example 1 except for adding an anionic surfactant ( "Unisalt MT" manufactured byMeisei chemical Ltd. ) to water in first and second baths instead of the nonionic surfactant. In this manner, a filter material comprising a nonwoven fabric comprising an ultra-fine continuous fiber was obtained. The evaluation results of each of physical properties of the obtained filter materials are shown in Table 3.

Comparative Example 1

A conjugate continuous fiber was produced and a sheet was formed from the conjugate continuous fiber by needle-punching under the same condition as in Example 1. The obtained sheet was then subjected to an extraction of a PVA as in Example 1 except that water-permeable sheets were not used and the obtained sheet was immersed in each bath of a successive multiple-step washing bath system for 5 minutes as the residence time. In this manner, a filter material comprising a nonwoven fabric comprising an ultra-fine continuous fiber was obtained. The evaluation results of each of physical properties of the obtained filter materials are shown in Table 3.

Comparative Example 2

A conjugate continuous fiber was produced and a sheet was formed from the conjugate continuous fiber by needle-punching under the same condition as in Example 1. The obtained sheet was then subjected to an extraction of a PVA component using a PET homoSB ("90153WSO" manufactured by Unitika Ltd., a nonwoven fabric made of a styrene-butadiene rubber-containing polyethylene terephthalate and has a fabric weight of 15 g/m$^2$) as water-permeable sheets and a successive multi-step washing bath system in which the preset temperatures of all baths were 95°C. In this manner, a filter material comprising a nonwoven fabric comprising an ultra-fine continuous fiber was obtained. The evaluation results of each of physical properties of the obtained filter materials are shown in Table 3.

Comparative Example 3

A polyethylene terephthalate (PET) having an intrinsic viscosity of 0.7 and a melting point of 255°C was prepared and heated by an extruder for melt-kneading. The resulting matter was guided to a spinning head at 280°C. Then, the guided matter was discharged from a spinneret under the following conditions: a nozzle diameter of 0.35 mm$\phi$ x 1008 holes, a discharge rate of 620 g/min. and a shear rate of 3000 sec$^{-1}$. The group of the discharged spun filaments was drawn and made thin at a drawing rate of 4000 m/min. by an ejector under cooling with cold wind of 20°C, wherein the ejector discharged a high-speed air and was located at a distance of 80 cm from the nozzle. Then, the group of the opened filaments was collected and deposited on a collecting conveyer apparatus rotating endlessly to form a web comprising a continuous fiber comprising a polyethylene terephthalate.

Thereafter, the web was allowed to pass through between an uneven-patterned embossed roll and a flat roll heated at 230°C under a linear load of 50 kgf/cm, and the embossed parts were thermocompressed. In this manner, a nonwoven fabric comprising the continuous fiber and having a fabric weight of 65 g/cm$^2$ was obtained. Incidentally, the continuous fiber had a single fiber fineness of 16.5 $\mu$m. The evaluation results of each of physical properties of the obtained filter materials are shown in Table 3.

Comparative Example 4

A polyethylene terephthalate having a melt flow rate of 400 g/10min. was melted and kneaded at 280°C by using an extruder. The flow of the melted polymer was guided to a meltblow die head, and the amount of the melted polymer was measured with a gear pump. Then the measured melted polymer was discharged from a meltblown nozzle having pores having a pore diameter of 0.3 mm$\phi$ and arranged in a line with a pitch between the pores of 0.75 mm. At the same time, the discharged resin was strongly sprayed with a hot air having a temperature of 240°C and collected on a molding conveyer. In this manner, a nonwoven fabric comprising a PET-series ultra-fine fiber and having a fabric weight of 80 g/m² was obtained. The evaluation results of each of physical properties of the obtained filter materials are shown in Table 3.

Comparative Example 5

The PVA (PVA)-1) pellet obtained in Synthesis Example 1 and a polyethylene terephthalate (PET) having an intrinsic viscosity of 0. 7 and a melting point of 255°C were prepared, each was heated by a separate extruder for melt-kneading. The resulting matter was guided to a 16-separated form (orange cross-sectional) conjugate spinning head heated to 280°C to adjust the mass ratio of PET relative to PVA in a conjugate continuous fiber constituting a nonwoven fabric [PET/PVA] to 85/15. Then, the guided matter was discharged from a spinneret under the following conditions: a nozzle diameter of 0.35 mmϕ x 1008 holes, a discharge rate of 1050 g/min. and a shear rate of 2500 sec⁻¹. The group of spun filaments was drawn and made thin at a drawing rate of 3000 m/min. with an ejector under cooling with cold wind of 20°C, wherein the ejector discharged a high-speed air and was located at a distance of 80 cm from the nozzle. Then, the group of the opened filaments was collected and deposited on a collecting conveyer apparatus rotating endlessly to form a web composed of a continuous fiber.

Thereafter, the web was allowed to pass through between an uneven-patterned embossed roll and a flat roll heated at 180°C under a linear load of 50 kgf/cm (490 N/cm), and the embossed parts were thermocompressed to give a nonwoven fabric comprising a 16-separated form conjugate continuous fiber having a fabric weight of 119 g/m². Incidentally, the single fiber fineness of the continuous fiber was 3.2 dtex.

About 50 cm of the obtained nonwoven fabric comprising the conjugate continuous fiber was subjected to an extraction of a PVA as in Example 1 except for not using water permeable sheets. In this manner, a filter material comprising a nonwoven fabric comprising an ultra-fine continuous fiber was obtained. The evaluation results of each of physical properties of the obtained filter materials are shown in Table 3.

Comparative Example 6

Except that the mass ratio of PET relative to PVA was 90/10, a web comprising a continuous fiber was formed as in Comparative Example 5. The fiber web was subjected to a sheet-forming by water-jetting, instead of needle-punching as in Example 1. In the water-jetting, a nozzle plate had nozzles having a diameter of 0.1 mm and arranged in three lines with a pitch between the nozzles of 0.6 mm, the water pressure of the nozzle in each line was 40 kgf/cm², 80 kgf/cm², and 150 kgf/cm², and the nonwoven fabric traveling speed of 5 m/min. In this manner, a filter material comprising a nonwoven fabric comprising an ultra-fine continuous fiber was obtained. The evaluation results of each of physical properties of the obtained filter materials are shown in Table 3.

[Table 2]

## Table 2

| | Water-insoluble polymer | PVA | Conjugate composition | Conjugate structure in cross section | Production condition of nonwoven fabric | |
| | | | | | Spinning temperature (°C) | Drawing rate (m/min.) |
|---|---|---|---|---|---|---|
| Examples | | | | | | |
| 1 | i-PET | PVA-1 | 70/30 | sea/300 islands | 260 | 3000 |
| 2 | i-PET | PVA-2 | 70/30 | sea/300 islands | 260 | 2800 |
| 3 | i-PET | PVA-3 | 70/30 | sea/300 islands | 260 | 2500 |
| 4 | i-PET | PVA-4 | 70/30 | sea/300 islands | 260 | 3000 |
| 5 | PBT | PVA-1 | 70/30 | sea/300 islands | 260 | 3000 |
| 6 | PA-6 | PVA-1 | 70/30 | sea/300 islands | 260 | 2800 |
| 7 | i-PET | PVA-1 | 30/70 | sea/300 islands | 260 | 2700 |
| 8 | i-PET | PVA-1 | 70/30 | sea/300 islands | 260 | 3000 |
| 9 | i-PET | PVA-1 | 70/30 | sea/300 islands | 260 | 3000 |
| 10 | i-PET | PVA-1 | 70/30 | sea/300 islands | 260 | 3000 |
| 11 | i-PET | PVA-1 | 70/30 | sea/300 islands | 260 | 3000 |
| 12 | i-PET | PVA-1 | 70/30 | sea/300 islands | 260 | 3000 |
| 13 | i-PET | PVA-1 | 70/30 | sea/300 islands | 260 | 3000 |
| 14 | i-PET | PVA-1 | 70/30 | sea/300 islands | 260 | 3000 |
| 15 | i-PET | PVA-1 | 70/30 | sea/300 islands | 260 | 3000 |

Table 2-continued

| Examples | Production results | | Sheet formation | PVA elution with hot water | | | |
| | Spinning state | State of nonwoven fabric | | Water permeable sheet | Temperature (°C) | Time (minutes) | Active agent |
|---|---|---|---|---|---|---|---|
| 1 | A | A | needle-punching | PA mesh | 60 to 95 | 6 | nonionic |
| 2 | B | B | needle-punching | PA mesh | 60 to 95 | 6 | nonionic |
| 3 | B | B | needle-punching | PA mesh | 60 to 95 | 6 | nonionic |
| 4 | A | A | needle-punching | PA mesh | 60 to 95 | 6 | nonionic |
| 5 | A | A | needle-punching | PA mesh | 60 to 95 | 6 | nonionic |
| 6 | A | A | needle-punching | PA mesh | 60 to 95 | 6 | nonionic |
| 7 | A to B | A to B | needle-punching | PA mesh | 60 to 95 | 6 | nonionic |
| 8 | A | A | water-jetting | PA mesh | 60 to 95 | 6 | nonionic |
| 9 | A | A | needle-punching | PET+SB | 60 to 95 | 6 | nonionic |
| 10 | A | A | needle-punching | cotton fabric | 60 to 95 | 6 | nonionic |
| 11 | A | A | needle-punching | PA mesh | 95 | 6 | nonionic |
| 12 | A | A | needle-punching | PA mesh | 60 to 95 | 6 | — |
| 13 | A | A | needle-punching | PA mesh | 60 to 95 | 30 | nonionic |
| 14 | A | A | needle-punching | PET+SB | 60 to 95 | 6 | nonionic |
| 15 | A | A | needle-punching | PA mesh | 60 to 95 | 6 | anionic |

EP 2 065 081 A1

Table 2-continued

| Comparative Examples | Water-insoluble polymer | PVA | Conjugate composition | Conjugate structure in cross section | Production condition of nonwoven fabric | |
|---|---|---|---|---|---|---|
| | | | | | Spinning temperature (°C) | Drawing rate (m/min.) |
| 1 | i-PET | PVA-1 | 70/30 | sea/300 islands | 260 | 3000 |
| 2 | i-PET | PVA-1 | 70/30 | sea/300 islands | 260 | 3000 |
| 3 | PET | — | homo (spunbonded) | — | 280 | 4500 |
| 4 | PET | — | homo (meltblown) | — | 280 | — |
| 5 | PET | PVA-1 | 85/15 | orange form | 260 | 3000 |
| 6 | PET | PVA-1 | 90/10 | orange form | 260 | 3000 |

Table 2-continued

| | Production results | | | PVA elution with hot water | | | |
| | Spinning state | State of nonwoven fabric | Sheet formation | Water permeable sheet | Temperature (°C) | Time (minutes) | Active agent |
|---|---|---|---|---|---|---|---|
| Comparative Examples | | | | | | | |
| 1 | A | A | needle-punching | — | 60 to 95 | 30 | nonionic |
| 2 | A | A | needle-punching | PET+SB | 95 | 6 | — |
| 3 | A | A | embossing | — | — | — | — |
| 4 | A | A | — | — | — | — | — |
| 5 | A | A | embossing | — | 60 to 95 | 6 | nonionic |
| 6 | A | A | water-jetting | PA mesh | 60 to 95 | 6 | nonionic |

[Table 3]

Table 3

| | Water-insoluble polymer | Proportion of remaining PVA (%) | Mean fiber diameter ($\mu$m) | Occupancy ratio of bundle of fiber (%) | Thickness (mm) | Fabric weight (A) ($g/m^2$) | Tensile strength (B) (kgf/5cm) | |
|---|---|---|---|---|---|---|---|---|
| | | | | | | | Longitudinal direction | Width direction |
| Examples | | | | | | | | |
| 1 | i-PET | 0.05 | 0.7 | 8 | 0.3 | 88 | 22 | 19 |
| 2 | i-PET | 0.4 | 0.9 | 13 | 0.32 | 91 | 18 | 17 |
| 3 | i-PET | 0.008 | 1.1 | 10 | 0.3 | 81 | 20 | 21 |
| 4 | i-PET | 0.04 | 0.7 | 6 | 0.29 | 83 | 23 | 16 |
| 5 | PBT | 0.05 | 0.8 | 5 | 0.33 | 85 | 24 | 25 |
| 6 | PA-6 | 3.2 | 0.7 | 16 | 0.38 | 92 | 20 | 18 |
| 7 | i-PET | 0.7 | 0.09 | 18 | 0.21 | 54 | 8 | 6 |
| 8 | i-PET | 0.004 | 0.7 | 2 | 0.18 | 80 | 22 | 23 |
| 9 | i-PET | 0.1 | 0.7 | 15 | 0.29 | 85 | 20 | 18 |
| 10 | i-PET | 0.04 | 0.7 | 5 | 0.28 | 81 | 25 | 20 |
| 11 | i-PET | 0.2 | 0.7 | 17 | 0.29 | 89 | 19 | 16 |
| 12 | i-PET | 0.3 | 0.7 | 18 | 0.27 | 90 | 17 | 15 |
| 13 | i-PET | 0.0003 | 0.7 | 7 | 0.31 | 87 | 21 | 18 |
| 14 | i-PET | 0.08 | 0.7 | 10 | 0.38 | 99 | 42 | 35 |
| 15 | i-PET | 0.1 | 0.7 | 16 | 0.28 | 87 | 14 | 15 |

Table 3-continued

| | (B)/(A) | | Air permeability $(\text{ml/cm}^2 \cdot \text{s})$ | Mean pore diameter $(\mu\text{m})$ | Filtration efficiency (%) | Removal rate of slight amount water (%) |
|---|---|---|---|---|---|---|
| | Longitudinal direction | Width direction | | | | |
| Examples | | | | | | |
| 1 | 25 | 21.6 | 1.1 | 4.8 | 96.5 | 72 |
| 2 | 19.8 | 18.7 | 1.4 | 5.6 | 91.4 | 85 |
| 3 | 24.7 | 25.9 | 2 | 7.1 | 90.8 | 20 |
| 4 | 27.7 | 19.3 | 0.9 | 4.5 | 97.1 | 67 |
| 5 | 28.2 | 29.4 | 1 | 4.4 | 97.8 | 63 |
| 6 | 21.7 | 19.6 | 2.3 | 8.1 | 92 | 92 |
| 7 | 14.8 | 11.1 | 0.8 | 3.9 | 91.9 | 80 |
| 8 | 27.5 | 28.8 | 0.7 | 3.6 | 93.3 | 16 |
| 9 | 23.5 | 21.2 | 1.2 | 5.1 | 95.8 | 69 |
| 10 | 30.9 | 24.7 | 0.8 | 4.2 | 98 | 70 |
| 11 | 21.3 | 18 | 1.9 | 8 | 91.1 | 76 |
| 12 | 18.9 | 16.7 | 2.2 | 9.2 | 90.5 | 83 |
| 13 | 24.1 | 20.7 | 1 | 4.6 | 95.6 | 8 |
| 14 | 42.4 | 35.4 | 1.3 | 5.5 | 95.8 | 80 |
| 15 | 16.1 | 17.2 | 1.9 | 7.8 | 92.1 | 85 |

Table 3-continued

| | Water-insoluble polymer | Proportion of remaining PVA (%) | Mean fiber diameter ($\mu$m) | Occupancy ratio of bundle of fiber (%) | Thickness (mm) | Fabric weight (A) ($g/m^2$) | Tensile strength (B) (kgf/5cm) | |
|---|---|---|---|---|---|---|---|---|
| | | | | | | | Longitudinal direction | Width direction |
| Comparative Examples | | | | | | | | |
| 1 | i-PET | 0.001 | 0.7 | 0.5 | 0.33 | 97 | 14 | 13 |
| 2 | i-PET | 0.2 | 0.7 | 41 | 0.3 | 85 | 40 | 34 |
| 3 | PET | — | 16.5 | 0 | 0.25 | 65 | 20 | 18 |
| 4 | PET | — | 2.8 | 0 | 0.4 | 80 | 2 | 2 |
| 5 | PET | 0.04 | 5.7 | 97 | 0.44 | 104 | 9 | 7 |
| 6 | PET | 2.5 | 5.8 | 24 | 0.48 | 123 | 25 | 21 |

Table 3-continued

| | (B)/(A) | | Air permeability (ml/cm²·s) | Mean pore diameter (μm) | Filtration efficiency (%) | Removal rate of slight amount water (%) |
|---|---|---|---|---|---|---|
| | Longitudinal direction | Width direction | | | | |
| Comparative Examples | | | | | | |
| 1 | 14.4 | 13.4 | 0.1 | 2.9 | 99 | 13 |
| 2 | 47.1 | 40 | 7.7 | 13.3 | 68.7 | 69 |
| 3 | 30.8 | 27.7 | 11 | 19.1 | 34.1 | 0 |
| 4 | 2.5 | 2.5 | 1 | 5.5 | 76.9 | 0 |
| 5 | 8.3 | 7.1 | 2.7 | 24.5 | 10.1 | 5 |
| 6 | 20.1 | 16.7 | 3.8 | 11 | 48.5 | 23 |

From the results in Table 3, the nonwoven fabrics obtained in Examples 1 to 15 had excellent dust collection efficiencies. It was recognized that the filter material obtained from the nonwoven fabrics were suitable for fuel filters having a high air permeability, particularly diesel engine fuel filters.

The nonwoven fabric obtained in Comparative Example 1 had a small occupancy ratio of the bundle of the ultra-fine fiber. That is, the ultra-fine fibers were almost completely dispersed in the nonwoven fabric. Since the nonwoven fabric had extremely small air permeability, the filter material obtained from the nonwoven fabric did not show an enough liquid permeability for a fuel filter material.

The nonwoven fabric obtained in Comparative Example 2 had a large amount of the bundle of the ultra-fine fiber and did not show advantages of ultra-fine fiber. Therefore, only a filter material having a poor dust collection efficiency for a fuel filter material was obtained from the nonwoven fabric.

The nonwoven fabric obtained in Comparative Example 3 had a large fiber diameter. Therefore, only a filter material having a poor dust collection efficiency for a fuel filter material was obtained from the nonwoven fabric.

The nonwoven fabric obtained in Comparative Example 4 had a small tensile strength. Therefore, the filter material obtained from the nonwoven fabric had an insufficient durability for a fuel filter material.

The nonwoven fabric obtained in Comparative Example 5 had a large fiber diameter. The ultra-fine fibers were not dispersed in the nonwoven fabric almost at all. Therefore, since the filter material obtained from the nonwoven fabric had a low tensile strength and an insufficient dust collection efficiency, the filter material is not suitable for a fuel filter material.

Since the nonwoven fabric obtained in Comparative Example 6 had a large amount of the remaining PVA and a large fiber diameter, the filter material obtained from the nonwoven fabric had an insufficient dust collection efficiency.

**Claims**

1. A filter material comprising a nonwoven fabric which comprises an ultra-fine continuous fiber having a mean fiber diameter of 0.05 to 1.8 $\mu$m,

   wherein the nonwoven fabric contains a bundle of the ultra-fine continuous fiber having a mean width of 3 to 100 $\mu$m and an occupancy area ratio of the bundle of the ultra-fine continuous fiber of 1 to 20% in the surface of the nonwoven fabric and satisfies the following formula:

$$100 \times (B)/(A) \geq 5.0$$

   wherein (B) is a tensile strength (kgf/5cm) in each of a longitudinal direction and a width direction of the nonwoven fabric and (A) is a fabric weight (g/m$^2$).

2. A filter material according to claim 1, wherein the ultra-fine continuous fiber comprises a water-insoluble thermoplastic resin and the nonwoven fabric contains a water-soluble thermoplastic resin in a proportion of 0.01 to 2% by mass.

3. A filter material according to claim 2, wherein the water-soluble thermoplastic resin comprises a modified polyvinyl alcohol containing at least one unit, in a proportion of 0.1 to 20 mol%, selected from the group consisting of an $\alpha$-olefin unit having carbon number of not more than four and a $C_{1-4}$ alkyl vinyl ether unit.

4. A filter material according to claim 2, wherein the water-insoluble thermoplastic resin comprises a polyester-series resin and the water-soluble thermoplastic resin comprises a modified polyvinyl alcohol containing an ethylene unit in a proportion of 3 to 20 mol%.

5. A filter material according to any one of claims 1 to 4, wherein the ultra-fine continuous fibers are entangled with each other by a needle-punching or a water-jetting.

6. A filter material according to any one of claims 1 to 5, wherein the nonwoven fabric is further laminated on a woven fabric or a nonwoven fabric.

7. A filter material according to any one of claims 1 to 6, which is a filter material for a liquid fuel.

8. A filter material according to any one of claims 1 to 7, which is a filter material for a diesel engine fuel.

9. A method for producing a filter material comprising a nonwoven fabric comprising an ultra-fine continuous fiber which has a mean fiber diameter of 0.05 to 1.8 $\mu$m, the method comprising removing a water-soluble thermoplastic resin from a nonwoven fabric or nonwoven web which comprises a conjugate continuous fiber comprising the water-soluble thermoplastic resin and a water-insoluble thermoplastic resin for forming the ultra-fine continuous fiber, wherein the nonwoven fabric or nonwoven web comprising the conjugate continuous fiber is treated with a hydrophilic solvent for dissolving or eluting the water-soluble thermoplastic resin therefrom and for allowing part of the water-soluble thermoplastic resin to remain in the nonwoven fabric.

10. A method according to claim 9, wherein both of a first surface and a second surface of the nonwoven fabric comprising the conjugate continuous fiber are covered with water-permeable sheets, and the nonwoven fabric is subjected to a successive removal of the water-soluble thermoplastic resin with being sandwiched with the water-permeable sheets.

11. A method according to claim 9 or 10, wherein the nonwoven fabric is treated for dissolving or eluting the water-soluble thermoplastic resin at a temperature of not higher than 60°C, the temperature is gradually increased, and the nonwoven fabric is treated therefor at a temperature in the range of 80 to 110°C in the end.

12. A method according to any one of claims 9 to 11, wherein the water-soluble thermoplastic resin is dissolved or eluted with a hydrophilic solvent in the presence of a surfactant.

13. A method according to claim 12, wherein the surfactant is a nonionic surfactant.

Fig. 1

<div align="center">

**INTERNATIONAL SEARCH REPORT**

</div>

| | International application No. |
|---|---|
| | PCT/JP2007/067969 |

| A. CLASSIFICATION OF SUBJECT MATTER |
|---|
| *B01D39/16*(2006.01)i, *B01D39/00*(2006.01)i, *D01F8/10*(2006.01)i, *D04H3/00* (2006.01)i, *D04H3/10*(2006.01)i, *D04H3/16*(2006.01)i, *D06M11/00*(2006.01)i, *D06M11/05*(2006.01)i |
| According to International Patent Classification (IPC) or to both national classification and IPC |

| B. FIELDS SEARCHED |
|---|
| Minimum documentation searched (classification system followed by classification symbols) |
| B01D39/16, B01D39/00, D01F8/10, D04H3/00, D04H3/10, D04H3/16, D06M11/00, D06M11/05 |

| Documentation searched other than minimum documentation to the extent that such documents are included in the fields searched |
|---|
| Jitsuyo Shinan Koho      1922-1996   Jitsuyo Shinan Toroku Koho   1996-2007<br>Kokai Jitsuyo Shinan Koho   1971-2007   Toroku Jitsuyo Shinan Koho   1994-2007 |

| Electronic data base consulted during the international search (name of data base and, where practicable, search terms used) |
|---|
| |

| C. DOCUMENTS CONSIDERED TO BE RELEVANT |||
|---|---|---|
| Category* | Citation of document, with indication, where appropriate, of the relevant passages | Relevant to claim No. |
| X<br>Y | JP 2006-89851 A (Kuraray Co., Ltd.),<br>06 April, 2006 (06.04.06),<br>Claims; Par. Nos. [0050], [0059], [0064]<br>(Family: none) | 9,11-13<br>1-8,10 |
| Y | JP 2003-221727 A (Kuraray Co., Ltd.),<br>08 August, 2003 (08.08.03),<br>Par. No. [0049]<br>(Family: none) | 10 |
| Y | JP 5-15717 A (Toyobo Co., Ltd.),<br>26 January, 1993 (26.01.93),<br>Claims; Par. No. [0007]<br>(Family: none) | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    12 November, 2007 (12.11.07) | Date of mailing of the international search report<br>    20 November, 2007 (20.11.07) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/067969

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-220447 A  (Kuraray Co., Ltd.), 18 August, 2005 (18.08.05), Par. Nos. [0047] to [0049] (Family: none) | 1-8 |
| Y | JP 2004-57882 A  (Kuraray Co., Ltd.), 26 February, 2004 (26.02.04), Claims; Par. No. [0020] (Family: none) | 1-8 |

Form PCT/ISA/210 (continuation of second sheet) (April 2007)

**INTERNATIONAL SEARCH REPORT**

International application No.

PCT/JP2007/067969

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    Claim 1 relates to a filter medium comprising "ultrafine-denier filament bundles" at a prescribed ratio and having a prescribed tensile strength/basis weight ratio, while claim 9 relates to a process for production of a filter medium not accompanied with the above numerical limitation.
    On the other hand, a filter medium which is made merely of an ultrafine-denier filament nonwoven fabric (which has the prescribed mean filament diameter) is publicly known prior to the priority date of this application (see documents cited in the description of this application, paragraph [0010]). Thus, there is no special technical feature common to the inventions of claims 1 and 9 and both groups of inventions of claims referring to claims 1 and 9 respectively.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

Form PCT/ISA/210 (continuation of first sheet (2)) (April 2007)

**EP 2 065 081 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001262456 A

- JP 2006089851 A